(19) Europäisches Patentamt
European Patent Office
Office européen des brevets

(11) **EP 3 162 539 A1**

(12) **EUROPEAN PATENT APPLICATION**
published in accordance with Art. 153(4) EPC

(43) Date of publication:
**03.05.2017 Bulletin 2017/18**

(51) Int Cl.:
***B29C 67/00*** (2017.01)

(21) Application number: **15810837.3**

(22) Date of filing: **23.04.2015**

(86) International application number:
**PCT/JP2015/062346**

(87) International publication number:
**WO 2015/198706 (30.12.2015 Gazette 2015/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **26.06.2014 JP 2014131439**

(71) Applicant: **Ricoh Company, Ltd.
Tokyo 143-8555 (JP)**

(72) Inventors:
• **KANEMATSU, Toshihiro
Tokyo 143-8555 (JP)**
• **MATSUBARA, Mayumi
Tokyo 143-8555 (JP)**

(74) Representative: **Schwabe - Sandmair - Marx
Patentanwälte Rechtsanwalt
Partnerschaft mbB
Joseph-Wild-Straße 20
81829 München (DE)**

(54) **THREE-DIMENSIONAL FABRICATION METHOD AND THREE-DIMENSIONAL FABRICATION APPARATUS**

(57) A three-dimensional shaping method for deforming (heating and melting) and depositing a plurality of shaping raw materials (100) in a predetermined solid shape, the three-dimensional shaping method includes a conveying process of conveying the plurality of shaping raw materials (a plurality of shaping raw materials (100) in different colors) to a deforming unit (a heat melting section (31)) by a conveying unit (a conveying section(10)); a deforming process of deforming the shaping raw materials by the deforming unit; a shaping-material forming process of twisting and arranging the deformed shaping raw materials in a helical fashion to form a shaping material by a shaping-material forming unit (a shaping-material forming section (30)); and a shaping process of sequentially depositing the shaping material to form a three-dimensional shaped object (102) by a shaping unit (a shaping section (70)).

FIG.7

**Description**

Field

The present invention relates to a three-dimensional shaping method for deforming and depositing a shaping raw material to obtain a three-dimensional shaped object and, more particularly, to a three-dimensional shaping method for generating a shaped object using multiple shaping raw materials and a three-dimensional shaping device that is suitable for the method.

Background

As a technology for forming a three-dimensional solid object, the technology called Rapid Prototyping (RP) is known. This technology uses data (data in Standard Triangulated Language (STL) format), which describes the surface of a single three-dimensional shape as a set of triangles, to calculate the cross-sectional shape, which is sliced thin in a lamination direction, and laminates each layer in accordance with the shape to form the solid object.
Furthermore, as the techniques for forming solid objects are known Fused Deposition Molding (FDM), inkjet techniques, inkjet binder techniques, Stereo Lithography (SL), Selective Laser Sintering (SLS), or the like.
In recent years, there has been an expectation to provide personal three-dimensional shaping devices at a low price, which is capable of colorizing shaped objects. As the methods suitable for colorization, there are inkjet methods and inkjet binder methods; however, there is a problem in that, as special inkjet heads and ink are necessary, devices and shaped objects are expensive.
Conversely, according to the FDM method, for example, a thermoplastic shaping raw material is heated to be in a fluid state, and each layer is sequentially laminated so that a solid object is formed. The FDM method has an advantage in that, as the materials widely used as mechanical components or for injection molding, or the like, may be used as shaping raw materials, shaped objects may be created at relatively low costs. However, it is generally said that the FDM method is not suitable for colorization as compared to the inkjet methods or the inkjet binder methods.

Summary

Technical Problem

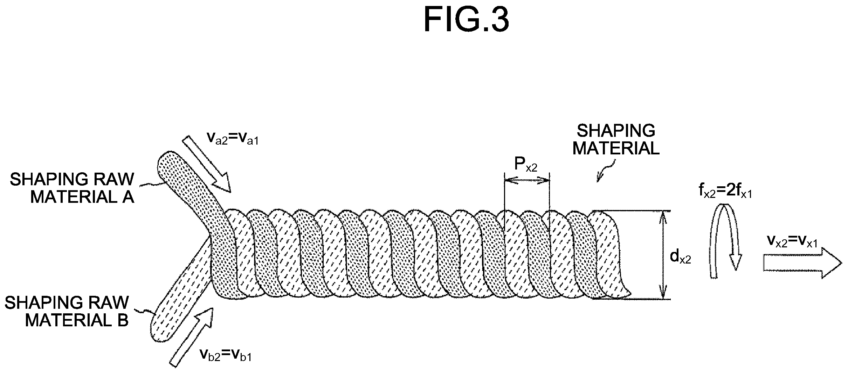

Here, Patent Literature 1 describes a FDM-method three-dimensional shaping device that uses shaping materials that have different weights in a unit volume depending on a shaped site.
Specifically, it describes that multiple shaping materials, which have different weights in a unit volume, are sequentially switched to be discharged so that the weight in a unit volume is changed depending on a shaped site (Paragraph 0033, FIG. 3(b)). According to this invention, if multiple shaping materials in different colors are used as the shaping materials, colored shaped objects may be created. However, there is a problem in that the number of colors is limited to the number of heads.
Furthermore, Patent Literature 1 describes that the mixture ratio between shaping materials within the heads is adjusted to change the weight of a shaping material in a unit volume (Paragraph 0033, FIG. 3(a)). If multiple shaping materials in different colors are used as the shaping materials, full colorization is possible. However, Patent Literature 1 does not consider colorization of shaped objects, and does not mention a specific method of mixing shaping raw materials.
The present invention has been made in consideration of the above-described problem, and has an object to provide a novel three-dimensional shaping method and a three-dimensional shaping device that forms a solid object using a shaping material that is formed from multiple shaping raw materials.

Solution to Problem

In order to solve the problem described above, the invention according to claim 1 is a three-dimensional shaping method for deforming and depositing a plurality of shaping raw materials in a predetermined solid shape, the three-dimensional shaping method including a conveying process of conveying the plurality of shaping raw materials to a deforming unit by a conveying unit, a deforming process of deforming the shaping raw materials by the deforming unit; a shaping-material forming process of twisting and arranging the deformed shaping raw materials in a helical fashion to form a shaping material by a shaping-material forming unit, and a shaping process of sequentially depositing the shaping material to form a three-dimensional shaped object by a shaping unit. Advantageous Effects of Invention
According to the present invention, multiple deformed shaping raw materials are twisted and arranged in a helical fashion so that a shaping material is formed, and the formed shaping material is sequentially deposited to form a three-dimensional shaped object. It is possible to provide a novel three-dimensional shaping method and a three-dimensional shaping device that forms a solid object using a shaping material that is formed from multiple shaping raw materials.

Brief Description of Drawings

FIG. 1A is a schematic diagram that illustrates the relationship between the distance from the object and the resolution of the human vision.

FIG. 1B is a table that illustrates the relationship between the distance from the object and the resolution owned by a person with the visual acuity of 1.0.

FIG. 2A is a schematic view of the formed shaping material in a case where there are two types of shaping raw materials.

FIG. 2B is a schematic view of the formed shaping material in a case where there are three types of shaping raw materials.

FIG. 3 is a schematic view of the shaping material that is formed if only the revolving speed is changed.

FIG. 4 is a schematic view of the shaping material that is formed if only the shaping velocity is changed.

FIG. 5 is a schematic view of the shaping material that is formed if only the conveying velocity of a shaping raw material A is changed.

FIG. 6 is a schematic view of the shaping material that is generated while combining the shaping conditions illustrated in FIGS. 3 to 5.

FIG. 7 is a cross-sectional view that schematically illustrates a three-dimensional shaping device according to a second embodiment of the present invention.

FIG. 8 is an enlarged cross-sectional view that schematically illustrates the relevant part of a shaping-material forming section.

FIG. 9 is a perspective view that schematically illustrates the relevant part of the shaping-material forming section.

FIG. 10 is a table that illustrates the relation among the revolving speed, the shaping velocity, and 1 pitch of the shaping material.

FIG. 11A is a longitudinal sectional view that schematically illustrates the relevant part of the shaping-material forming section of the three-dimensional shaping device according to a third embodiment of the present invention.

FIG. 11B is a C-C cross-sectional view of FIG. 11A.

FIG. 12 is a longitudinal sectional view that schematically illustrates the relevant part of the shaping-material forming section, which illustrates a modified example of FIG. 11A.

FIG. 13A is a perspective view that illustrates an example of the three-dimensional shaped object that is formed if the thickness of the shaping material, which forms each layer, is the same.

FIG. 13B is a view of the arrow A and a view of the arrow B of FIG. 13A.

FIG. 14A is a view that illustrates the three-dimensional shaped object that is formed if the thickness of a shaping material which forms each layer, is changed, and corresponds to the view of the arrow A and the view of the arrow B in FIG. 13A.

FIG. 14B is a table that illustrates the relation between the layer angle and the thickness of the shaping material.

FIG. 15A is a schematic view that illustrates a shaping process.

FIG. 15B is a schematic view that illustrates a shaping process.

FIG. 15C is a schematic view that illustrates a shaping process.

FIG. 16 is a functional block diagram that illustrates a configuration of a control unit that performs the process according to a fourth embodiment.

FIG. 17 is the main flowchart that illustrates the fourth embodiment.

FIG. 18 is a flowchart of the subroutine.

FIG. 19 is a functional block diagram that illustrates a modified configuration of the control unit that performs the process according to the fourth embodiment.

FIG. 20 is a flowchart of the subroutine.

FIG. 21 is a side view and a bottom view of the rotary member.

FIG. 22 is a view that corresponds to the D-D cross-sectional surface of a twisting section illustrated in FIG. 8.

FIG. 23 is a view of the state where shaping is conducted in the solid line from (A) to (B) using a conventional shaping method without any rotation mechanisms.

FIG. 24A is a side view that illustrates the state of shaping according to a tenth embodiment.

FIG. 24B is a top view that illustrates the state of shaping according to the tenth embodiment.

FIG. 25 is a view that illustrates shaping according to an eleventh embodiment.

FIG. 26 is a view that illustrates shaping according to the eleventh embodiment.

Description of Embodiments

A detailed explanation is given below of the present invention using the embodiments that are illustrated in the drawings. Here, components, types, combinations, shapes, relative arrangements, or the like, described in the embodiments are only examples for explanation unless otherwise specified, and there is no intention to limit the scope of the present invention thereto.

The three-dimensional shaping method according to an embodiment of the present invention has the feature that multiple shaping raw materials with different colors are deformed, conveyed at a predetermined velocity, twisted at a predetermined velocity, and deposited at a predetermined blend ratio in a helical fashion so that a full-color shaping material is formed, and the formed shaping material is sequentially deposited so that a three-dimensional shaped object is obtained. Furthermore, with the three-dimensional shaping method according to the present invention, multiple materials with different tactual senses or multiple conductors with different resistance values are used as shaping raw materials, whereby it is also possible to obtain shaped objects of which the tactual sense or the resistance value is flexibly changed.

[Coloration interval of shaping raw materials]

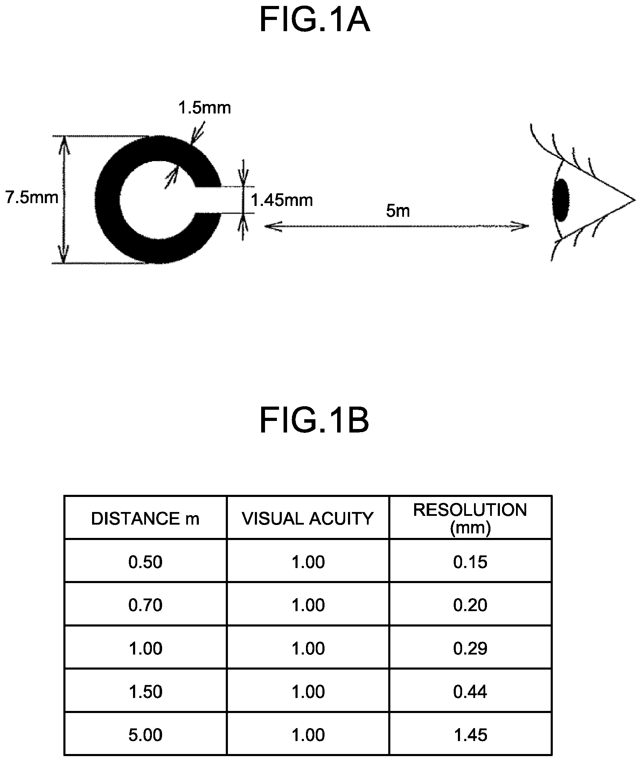

First, the resolution of the human vision is explained, and then full colorization of shaping materials is explained. FIG. 1A is a schematic diagram that illustrates the relationship between the distance from the object and the resolution of the human vision, and FIG. 1B is a table that illustrates the relationship between the distance from the object and the resolution owned by a person with the visual acuity of 1.0.

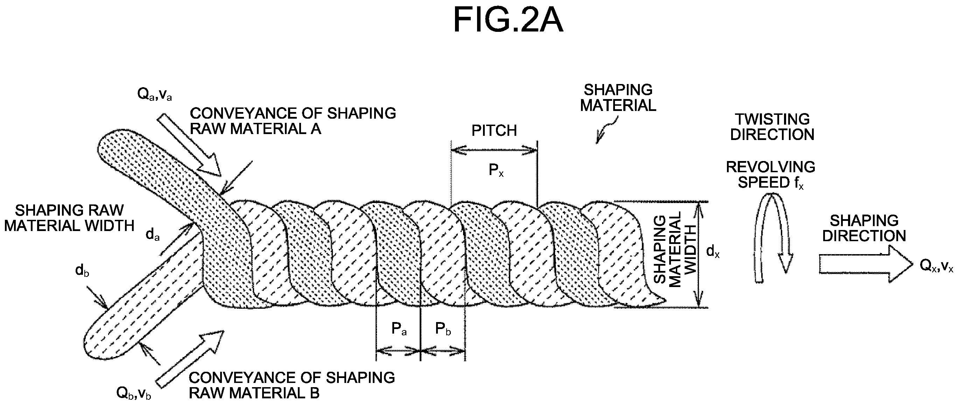

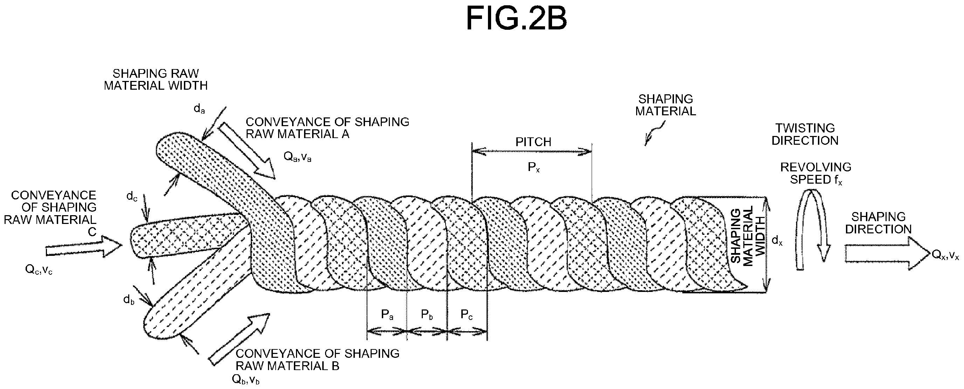

As illustrated in FIG. 1A, if the Landolt ring with a diameter of 7.5 mm, a thickness of 1.5 mm, and a gap of 1.45 mm can be visually recognized at a distance of 5 m, the human visual acuity is 1 degree of the visual angle, i.e., the visual acuity of 1.0. Specifically, if the object is observed at a distance of 5 m, the resolution owned by a person with the visual acuity of 1.0 is 1.45 mm. As illustrated in FIG. 1B, if the object is observed at a distance of 1 m, the resolution owned by a person with the visual acuity of 1.0 is 0.29 mm. In a case where it is assumed that a shaped object is observed at a distance of 1 m, and if multiple colors are arranged within the range of equal to or less than 0.29 mm, the multiple colors are seen as being mixed, and therefore are recognized as a single color by humans. According to each embodiment of the present invention, a pitch $P_x$ of the shaping material, illustrated in FIG. 2, is determined using the human's visual resolution as a reference.

For full colorization of shaping materials, the percentage of shaping raw materials included in the 1 pitch $P_x$ may be changed. For example, if the subtractive color process is applied, shaping raw materials in four colors, that is, white (or black) in addition to the three primary colors, i.e., cyan, magenta, and yellow, are used, and the percentage of the shaping raw material in each color, arranged in the 1 pitch $P_x$, is changed so that the shaping materials may be full-colorized.

[First embodiment: three-dimensional shaping method and theory thereof]

An explanation is given of the three-dimensional shaping method according to an embodiment of the present invention. FIG. 2 is a schematic view of the shaping material to be formed, where in the case of FIG. 2A, there are 2 types of shaping raw materials, and in the case of FIG. 2B, there are 3 types of shaping raw materials. Furthermore, in the following equations, the subscript index a represents the parameter with regard to a shaping raw material A, the subscript index b represents the parameter with regard to a shaping raw material B, and the subscript index x represents the parameter with regard to the formed shaping material.

First, an explanation is given of a case where there are 2 types of shaping raw materials.

If the operational relationship in FIG. 2A is represented using general equations, the following Equation (1) and Equation (2) are obtained.

$$Q_x \; = \; Q_a \; + \; Q_b \; = \; \frac{1}{4}\,\pi\!\left(d_a^{\;2} \times v_a \; + \; d_b^{\;2} \times v_b\right) \; = \; \frac{1}{4}\,\pi \times d_x^{\;2} \times v_x \qquad (1)$$

$$f_x \; = \; \frac{v_x}{P_x} \qquad\qquad\qquad (2)$$

Here, the conveying flow quantity and the shaping flow quantity: Q [mm$^3$/s]

the conveying velocity and the shaping velocity: v [mm/s]

the width of the shaping raw material and the width of the shaping material: d [mm]

the pitch: P [mm]

the revolving speed (the twisting speed): fx [rps]

Equation (1) indicates that the flow quantity Q is given by "the cross-sectional area×the velocity v". Here, for simplification of the equations, an explanation is given based on the assumption that the cross-sectional shapes of the shaping raw material and the shaping material are circular.

An explanation is given of a change that occurs in the shaping material when shaping is conducted while each parameter is changed. The parameter of the reference value (before change) is represented using the subscript index "1", and the parameter (the changed value) that is changed from the reference value is represented using the subscript index "2".

With the reference value, Equations (1) and (2) are established as described below (Equation (1-1), Equation (2-1)).

$$Q_{x1} = Q_{a1} + Q_{b1} = \frac{1}{4} \pi \left( d_{a1}^2 \times v_{a1} + d_{b1}^2 \times v_{b1} \right) = \frac{1}{4} \pi \times d_{x1}^2 \times v_{x1}$$

$$(1-1)$$

$$f_{x1} = \frac{v_{x1}}{P_{x1}} \qquad (2-1)$$

With the changed value, Equations (1) and (2) are established as described below (Equation (1-2), Equation (2-2)) .

$$Q_{x2} = Q_{a2} + Q_{b2} = \frac{1}{4} \pi \left( d_{a2}^2 \times v_{a2} + d_{b2}^2 \times v_{b2} \right) = \frac{1}{4} \pi \times d_{x2}^2 \times v_{x2}$$

$$(1-2)$$

$$f_{x2} = \frac{v_{x2}}{P_{x2}} \qquad (2-2)$$

<Change in the pitch if the revolving speed is changed>

An explanation is given of a change in the pitch P if only the revolving speed $f_x$ is changed from the reference value. FIG. 3 is a schematic view of the shaping material that is formed if only the revolving speed is changed. Here, an explanation is given of a case where, for example, a changed revolving speed $f_{x2}$ is twice as much as a reference revolving speed $f_{x1}$ ($f_{x2}=2f_{x1}$). According to Equation (2), Equation (2') is obtained.

$$v_x = f_x \times P_x \qquad (2')$$

As the shaping velocity $v_x$ is the same ($v_x=v_{x1}=v_{x2}$), each parameter $f_x$, P, and [$f_{x2}=2f_{x1}$] of the reference value and the changed value are applied to Equation (2') so that Equation (2'-1) is obtained.

$$v_x = f_{x1} \times P_{x1} = f_{x2} \times P_{x2} = 2f_{x1} \times P_{x2} \qquad (2'-1)$$

Therefore, Equation (3) is obtained.

$$P_{x2} \; = \; \frac{f_1}{f_2} \; \times \; P_{x1} \; = \; \frac{f_1}{2f_1} \; \times \; P_{x1} \; = \; \frac{1}{2} \; \times \; P_{x1} \qquad\qquad (3)$$

Thus, the changed pitch $P_{x2}$ is 1/2 of the reference pitch $P_{x1}$, and high-resolution coloration is obtained. That is, the pitch $P_x$ of the shaping material can be changed by changing the revolving speed $f_x$. Here, the shaping width $d_x$ is not changed.

<Case where the shaping velocity is changed>

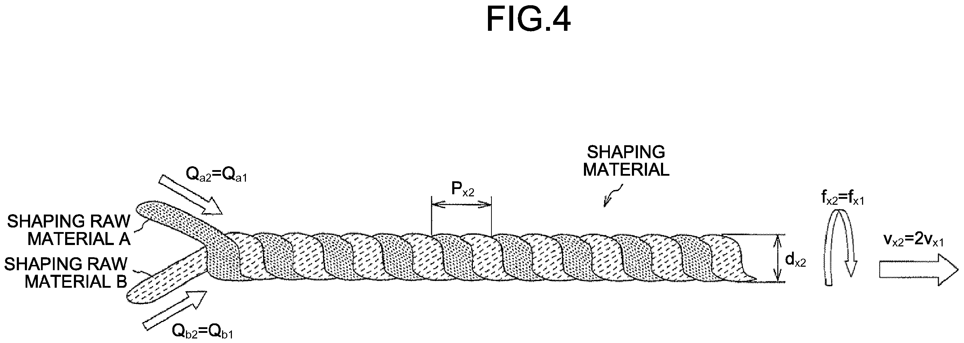

An explanation is given of a change in the parameter if only the shaping velocity $v_x$ is changed from the reference value. FIG. 4 is a schematic view of the shaping material that is formed if only the shaping velocity is changed. For example, an explanation is given of a case where the changed shaping velocity $v_{x2}$ is twice as much as the reference shaping velocity $v_{x1}$ ($v_{x2}=2v_{x1}$).

«Change in the pitch»

An explanation is given of a change in the pitch P. The revolving speed $f_x$ is the same ($f_x=f_{x1}=f_{x2}$); therefore, according to Equation (2), Equation (3-1) is obtained.

$$f_x \; = \; \frac{v_{x1}}{P_{x1}} \; = \; \frac{v_{x2}}{P_{x2}} \; = \; \frac{2v_{x1}}{P_{x2}} \qquad\qquad (3-1)$$

If this equation is rearranged, Equation (4) is obtained.

$$P_{x2} \; = \; \frac{v_{x2}}{v_{x1}} \; \times \; P_{x1} \; = \; \frac{2v_{x1}}{v_{x1}} \; \times \; P_{x1} \; = \; 2 \times P_{x1} \qquad (4)$$

Thus, the changed pitch $P_{x2}$ is twice as much as the reference pitch $P_{x1}$, and low-resolution coloration is obtained. That is, if the shaping velocity $v_x$ is changed, the pitch $P_x$ of the shaping material may be changed.

«Change in the shaping material width»

Next, an explanation is given of a change in the shaping material width $d_x$. As the shaping flow quantity $Q_x$ is the same ($Q_x=Q_{x1}=Q_{x2}$), [$v_{x2}=2v_{x1}$] is substituted into Equation (1) so that Equation (4-1) is obtained.

$$Q_x \; = \; \frac{1}{4} \pi \times d_{x1}{}^2 \times v_{x1} \; = \; \frac{1}{4} \pi \times d_{x2}{}^2 \times v_{x2} \; = \; \frac{1}{4} \pi \times d_{x2}{}^2 \times 2v_{x1}$$

$$(4-1)$$

If this equation is rearranged, Equation (4-2) is obtained.

$$d_{x2}{}^2 \; = \; \frac{v_{x1}}{v_{x2}} \times d_{x1}{}^2 \; = \; \frac{v_{x1}}{2v_{x1}} \times d_{x1}{}^2 \; = \; \frac{1}{2} \times d_{x1}{}^2 \qquad (4-2)$$

Thus, Equation (5) is obtained.

$$d_{x2} \; = \; \frac{1}{\sqrt{2}} \, d_{x1} \qquad\qquad (5)$$

Thus, the changed shaping material width $d_{x2}$ is the square root of 1/2 times as much as the reference shaping material width $d_{x1}$, and high resolution is obtained. That is, if the shaping velocity $v_x$ is changed, the shaping material

width $d_x$ may be changed.

It is understood that, the pitch $P_{x2}$ and the shaping material width $d_{x2}$ can be changed by changing the shaping velocity $v_x$.

<Case where the conveying velocity of some of the shaping raw materials is changed>

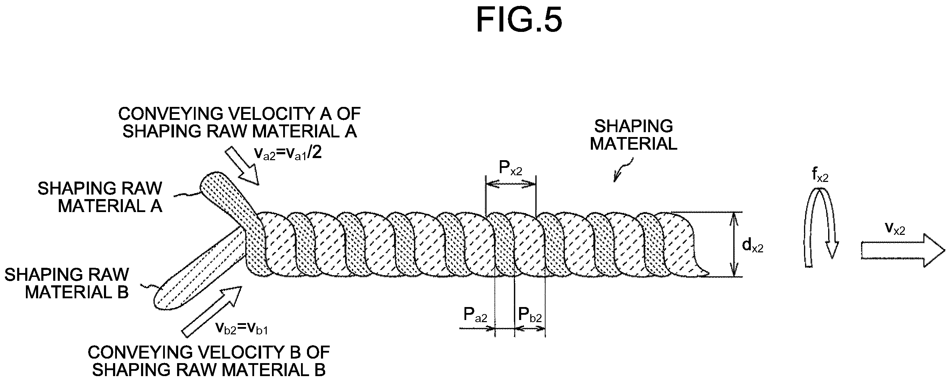

An explanation is given of changes in the shaping material width $d_x$, the shaping velocity $v_x$, and the pitch $P_x$ if only the conveying velocity $v_a$ of the shaping raw material A is changed from the reference value. FIG. 5 is a schematic view of the shaping material that is formed if only the conveying velocity of the shaping raw material A is changed. For example, an explanation is given of the case where the changed conveying velocity $v_{a2}$ is 1/2 of the reference conveying velocity $v_{a1}$ ($v_{a2}$-$v_{a1}$/2).

For simplification of calculation below, the conveying velocity $v_{b1}$ and the shaping raw material width $d_{b1}$ of the shaping raw material B are the same as of the shaping raw material A ($v_{b1}$=$v_{a1}$, $d_{b1}$=$d_{a1}$). As the shaping raw material width $d_a$ of the shaping raw material A, the shaping raw material width $d_b$ of the shaping raw material B, and the shaping velocity $v_b$ of the shaping raw material B are the same ($d_{a1}$=$d_{a2}$, $d_{b1}$=$d_{b2}$, $v_{b1}$-$v_{b2}$), Equation (5-1) and Equation (5-2) are obtained from Equation (1-1) and Equation (1-2).

$$Q_{x1} = \frac{1}{4}\pi\left(d_{a1}{}^2 \times v_{a1} + d_{b1}{}^2 \times v_{b1}\right) = \frac{1}{4}\pi\left(d_{a1}{}^2 \times v_{a1} + d_{a1}{}^2 \times v_{a1}\right) = \frac{2}{4}\pi\left(d_{a1}{}^2 \times v_{a1}\right)$$

$$(5-1)$$

$$Q_{x2} = \frac{1}{4}\pi\left(d_{a2}{}^2 \times v_{a2} + d_{b2}{}^2 \times v_{b2}\right) = \frac{1}{4}\pi\left(d_{a1}{}^2 \times \frac{1}{2}v_{a1} + d_{a1}{}^2 \times v_{a1}\right) = \frac{3}{8}\pi\left(d_{a1}{}^2 \times v_{a1}\right)$$

$$(5-2)$$

Thus, Equation (6) is obtained.

$$Q_{x2} = \frac{3}{4}Q_{x1} \qquad (6)$$

If the conveying velocity $v_a$ of the shaping raw material A is changed, the shaping flow quantity $Q_x$ is changed. This means that the shaping material width $d_x$ and the pitch $P_x$ may be changed in accordance with the shaping velocity $v_x$ (or the opposite is established).

Here, the ratio ($P_{a2}$:$P_{b2}$) between the pitches of the shaping raw materials A and B in the shaping material is equal to the ratio ($v_{a2}$:$v_{b2}$) between the conveying velocities of the shaping raw materials A and B, and Equation (7) is obtained.

$$P_{a2} : P_{b2} = v_{a2} : v_{b2} = 1 : 2 \qquad (7)$$

«Change in the shaping material width and the pitch if the shaping velocity is not changed»

An explanation is given of the changed shaping material width $d_{x2}$ if only the conveying velocity $v_a$ of the shaping raw material A is changed and the shaping velocity $v_x$ is the same ($v_{x1}$=$v_{x2}$). Equation (7-1) is obtained from Equation (1-1).

$$Q_{x1} = \frac{1}{4}\pi \times d_{x1}{}^2 \times v_{x1} \qquad (7-1)$$

If Equation (7-1) is deformed, Equation (8) is obtained.

$$v_{x1} = \frac{4}{\pi} \times \frac{Q_{x1}}{d_{x1}^{2}} \tag{8}$$

Furthermore, Equation (8-1) is obtained from Equation (1-2).

$$Q_{x2} = \frac{1}{4} \pi \times d_{x2}^{2} \times v_{x2} = \frac{1}{4} \pi \times d_{x2}^{2} \times v_{x1} \tag{8-1}$$

If Equation (8-1) is deformed, and Equation (6) and Equation (8) are substituted, Equation (8-2) is obtained.

$$d_{x2}^{2} = \frac{4}{\pi} \frac{Q_{x2}}{v_{x1}} = \frac{Q_{x2}}{Q_{x1}} d_{x1}^{2} = \frac{\frac{3}{4} Q_{x1}}{Q_{x1}} d_{x1}^{2} = \frac{3}{4} d_{x1}^{2} \tag{8-2}$$

Thus, Equation (9) is obtained.

$$d_{x2} = \frac{\sqrt{3}}{2} d_{x1} \tag{9}$$

Thus, the changed shaping material width $d_{x2}$ is the square root 3/2 times as much as the reference shaping material width $d_{x1}$. That is, if the conveying velocity $v_a$ of the shaping raw material A is changed and the shaping velocity $v_x$ is the same, the shaping material width $d_x$ may be changed.
Furthermore, the pitch $P_{x2}$ is explained. As the revolving speed $f_x$ is the same ($fx_1=f_{x2}$), Equation (9-1) and Equation (10) are obtained from Equation (2-1) and Equation (2-2).

$$\frac{v_{x1}}{P_{x1}} = \frac{v_{x2}}{P_{x2}} = \frac{v_{x1}}{P_{x2}} \tag{9-1}$$

$$P_{x2} = P_{x1} \tag{10}$$

As it is understood from this Equation, the pitch $P_x$ is not changed.

«Changes in the shaping velocity and the pitch if the shaping material width is not changed»

Next, an explanation is given of the changed shaping velocity $v_{x2}$ if only the conveying velocity $v_a$ of the shaping raw material A is changed and the shaping material width $d_x$ is the same ($d_{x1}=d_{x2}$). Equation (10-1) and Equation (11) are obtained from Equation (1-1).

$$Q_{x1} = \frac{1}{4} \pi \times d_{x1}^{2} \times v_{x1} \quad \ldots (10-1)$$

$$d_{x1}^{2} = \frac{4}{\pi} \times \frac{Q_{x1}}{v_{x1}} \tag{11}$$

Thus, Equation (11-1) is obtained from Equation (1-2).

$$Q_{x2} = \frac{1}{4} \pi \times d_{x2}^{2} \times v_{x2} = \frac{1}{4} \pi \times d_{x1}^{2} \times v_{x2} \tag{11-1}$$

If Equation (11) is substituted after deformation, Equation (11-2) is obtained.

$$v_{x2} = \frac{4}{\pi} \times \frac{Q_{x2}}{d_{x1}^2} = \frac{Q_{x2}}{Q_{x1}} \times v_{x1} \qquad (11-2)$$

If Equation (6) is substituted into Equation (11-2), Equation (12) is obtained.

$$v_{x2} = \frac{3}{4} \frac{Q_{x1}}{Q_{x1}} v_{x1} = \frac{3}{4} v_{x1} \qquad (12)$$

Thus, the changed shaping velocity $v_{x2}$ is 3/4 of the reference shaping velocity $v_{x1}$. That is, if the conveying velocity $v_a$ of the shaping raw material A is changed and the shaping material width $d_x$ is the same, the shaping velocity $v_x$ may be changed.

An explanation is further given of the changed pitch $P_{x2}$. As the revolving speed $f_x$ is the same ($f_{x1}=f_{x2}$), Equation (12-1) and Equation (12-2) are obtained from Equation (2-1) and Equation (2-2).

$$\frac{v_{x1}}{P_{x1}} = \frac{v_{x2}}{P_{x2}} \qquad (12-1)$$

$$P_{x2} = \frac{v_{x2}}{v_{x1}} P_{x1} \qquad (12-2)$$

If Equation (12) is substituted into Equation (12-2), Equation (13) is obtained.

$$P_{x2} = \frac{\frac{3}{4} v_{x1}}{v_{x1}} P_{x1} = \frac{3}{4} P_{x1} \qquad (13)$$

Thus, the changed pitch $P_{x2}$ is 3/4 of the reference pitch $P_{x1}$. That is, if the conveying velocity $v_a$ of the shaping raw material A is changed and the shaping material width $d_x$ is the same, the pitch $P_x$ of the shaping material may be changed.

Furthermore, as described above, the ratio ($P_{a2}:P_{b2}$) between the pitches of the shaping raw materials A and B in the shaping material is equal to the ratio ($v_{a2}:v_{b2}$) between the conveying velocities of the shaping raw materials A and B.

As described above, the ratio between the pitches of the shaping raw materials in the shaping material can be changed flexibly by changing the conveying velocity of some of the shaping raw materials. This method is an important method for adjusting the ratio of deposition of shaping raw materials to generate various colors.

<Summary>

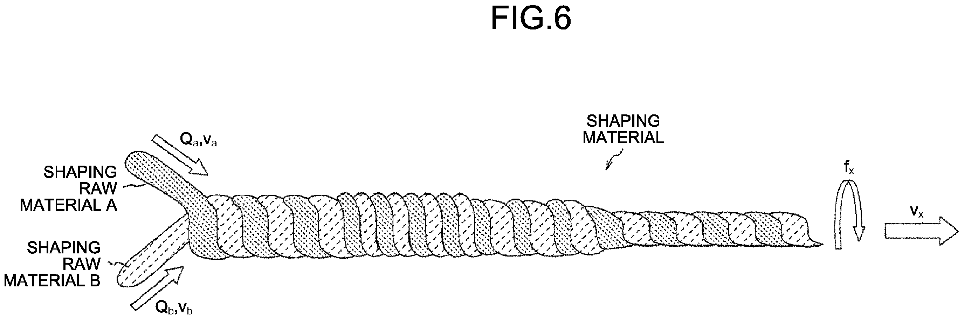

FIG. 6 is a schematic view of the shaping material that is generated while combining the shaping conditions illustrated in FIGS. 3 to 5. As it is understood from this figure, by conducting shaping while changing at least one of the conveying velocity of the shaping raw material, the twisting speed (the revolving speed) of the shaping raw material, and the shaping velocity of the shaping material, or changing in combination, it is possible to obtain shaped objects that use shaping materials with various pitches or shaping widths.

<Case where there are three or more shaping raw materials>

If the operational relationship in FIG. 2B is represented using a general equation, the equation represented by the following Equation (13-1) is obtained.

$$Q_x = Q_a + Q_b + Q_c = \frac{1}{4}\pi\left(d_a^{\,2} \times v_a + d_b^{\,2} \times v_b + d_c^{\,2} \times v_c\right) = \frac{1}{4}\pi \times d_x^{\,2} \times v_x$$

$$(13\text{-}1)$$

Here, the equation that corresponds to Equation (2) is the same as in the case of FIG. 2A. As it is understood from the above general equation, as is the case with the two colors, if there are three or more colors of shaping raw materials, the shaping material width, the pitch of the shaping raw material included in the shaping material, or the like, can be changed flexibly by appropriately changing the revolving speed $f_x$, the shaping velocity $v_x$, and the conveying velocities $v_a$, $v_b$, and $v_c$ of the shaping raw materials.

[Second embodiment: three-dimensional shaping device]

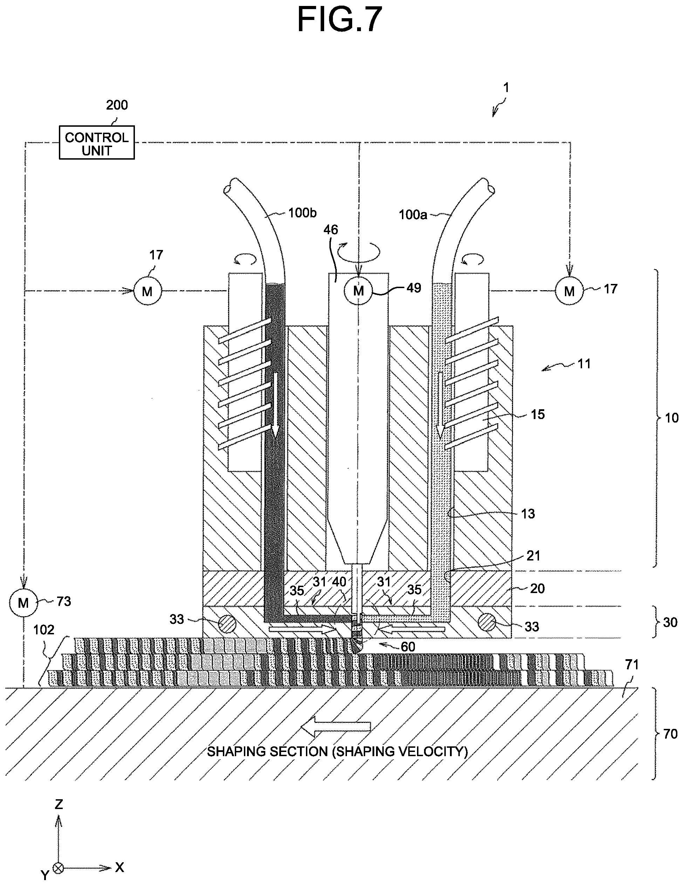

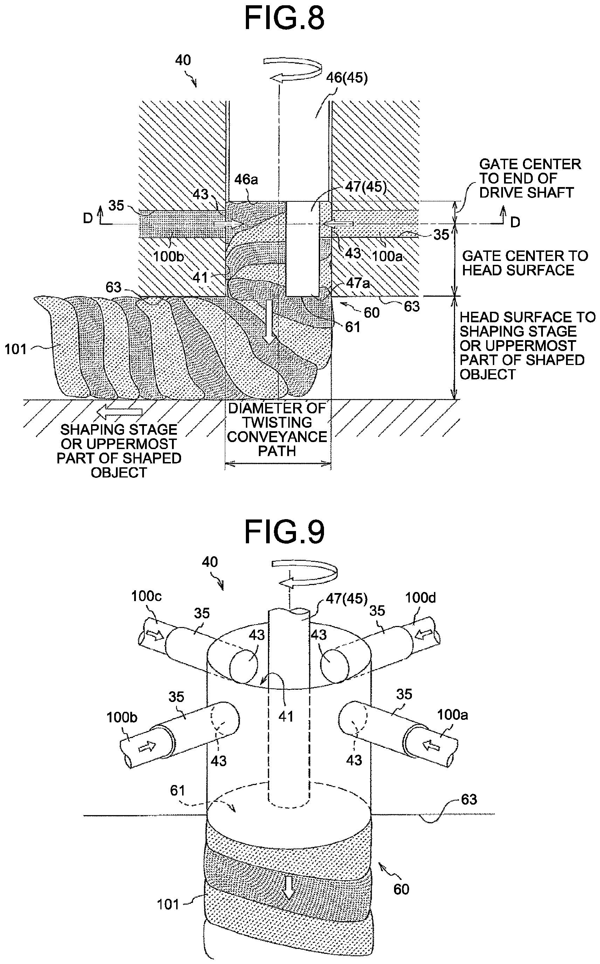

With reference to FIGS. 7 to 9, an explanation is given of a three-dimensional shaping device that implements the three-dimensional shaping method. FIG. 7 is a cross-sectional view that schematically illustrates the three-dimensional shaping device according to a second embodiment of the present invention. FIG. 8 is an enlarged cross-sectional view that schematically illustrates the relevant part of a shaping-material forming section. FIG. 9 is a perspective view that schematically illustrates the relevant part of the shaping-material forming section.

A three-dimensional shaping device 1 is a device that forms a three-dimensional shaped object using a fused deposition modeling (FDM) method, in which a shaping raw material 100 is melted (deformed) and deposited in a predetermined solid shape.

The schematic operations of the three-dimensional shaping device 1 are as follows. The three-dimensional shaping device 1 melts the shaping raw material 100 at a heat melting section 31, and introduces the shaping raw materials 100 in combination and with appropriate amounts to a twisting section 40 to achieve the desired coloration. Next, the shaping raw material 100 is twisted at a rotary member 45 of the twisting section 40 so that a shaping material with a predetermined color is formed, and the shaping material is finally discharged onto a shaping stage 71 through a discharge opening 61, whereby the shaping material is shaped on the shaping stage 71.

The three-dimensional shaping device 1 includes a conveying section 10 that includes multiple conveying mechanisms 11 that convey multiple shaping raw materials 100 (100a, 100b, 100c, 100d) with different colors down to the heat melting section 31; a shaping-material forming section 30 that includes the heat melting section 31 that heats and melts each of the shaping raw materials 100 conveyed by the conveying mechanisms 11, and the twisting section 40 that twists and arranges the deformed shaping raw materials 100 in a helical fashion so as to form a multicolor shaping material 101; and a shaping section 70 that sequentially deposits the shaping material 101 to form a three-dimensional shaped object.

<Shaping raw material>

The shaping raw material is formed of thermoplastic resin, such as ABS resin. According to the present embodiment, four shaping raw materials in the three primary colors, i.e., cyan (Cyan), magenta (Magenta), and yellow (yellow), and white (or black) are used as the shaping raw materials, and thus full-color shaping materials can be obtained using subtractive color mixing.

<Conveying section>

The conveying section 10 is a section that conveys the shaping raw material 100 in solid state to the downstream shaping-material forming section 30, and includes the conveying mechanisms 11 that are provided for the shaping raw materials, i.e., for each of the colors. According to the present embodiment, as illustrated in FIG. 9, the four conveying mechanisms 11 are provided to convey the shaping raw materials 100 in 4 types (4 colors). Each of the conveying mechanisms 11 includes a raw-material conveyance path 13, through which the shaping raw material 100 is conveyed; a conveyance gear 15 that is exposed to the raw-material conveyance path 13 to be in contact with the surface of the shaping raw material 100, thereby sequentially delivering the shaping raw material 100 downstream; and a conveyance motor 17 that rotates and drives the conveyance gear 15.

The raw-material conveyance path 13 has substantially a cylindrical shape that has an inner diameter, through which the shaping raw material 100 may be passed. For example, the raw-material conveyance path 13 with an inner diameter $\phi$ of 3 mm conveys the shaping raw material with $\phi$ 3 mm whose outer diameter is substantially the same as the inner diameter.

The conveyance gear 15 may be a worm gear as illustrated, or may be two rotatable pulleys that are provided such that the outer circumferences are opposed to each other. In the case of the latter, the shaping raw material is conveyed while being sandwiched and held between the outer circumferences of the two pulleys.

The conveyance motor 17 rotates and drives the conveyance gear 15 to convey the amount of shaping raw material that corresponds to the coloration ratio of each of the shaping raw materials 100. The conveyance motor 17 is driven and controlled by a control unit 200.

<Heat insulating member>

A heat insulating member 20 is provided between the conveying section 10 and the shaping-material forming section 30. At the conveying section 10, the conveyance gear 15 is brought into contact with the outer surface of the shaping raw material 100 so that the conveyance power is applied; therefore, the shaping raw material needs to be retained in a solid state. The heat insulating member 20 prevents heat of a heater 33 from being transmitted to the conveying section 10 so that the shaping raw material may be retained in a solid state.

In the heat insulating member 20, multiple paths 21 are formed, through which the shaping raw materials 100 in solid state, conveyed from the conveying section 10, are inserted and conveyed. The inner diameter of each of the paths 21 is substantially the same as the inner diameter of each of the raw-material conveyance paths 13.

<Shaping-material forming section>

The shaping-material forming section 30 is a section that melts the shaping raw material 100, conveyed from the conveying section 10, arranges the shaping raw material 100 in a helical fashion while twisting the shaping raw material 100, and ejects the shaping raw material 100 toward the downstream shaping section 70.

The shaping-material forming section 30 includes the heat melting section 31 that conveys the shaping raw materials 100 downstream while heating and melting the shaping raw materials 100; the twisting section 40 that arranges the melted shaping raw materials 100 in a helical fashion while twisting the melted shaping raw materials 100, thereby forming the multicolor shaping material 101; and a head section 60 that ejects the shaping material 101.

The heat melting section 31 includes the heater 33 that heats and melts each of the shaping raw materials 100; and a runner 35 (melted raw-material conveyance path: deformed raw-material conveyance path) that conveys each of the shaping raw materials, heated and melted by the heater 33, to the downstream twisting section 40.

The heater 33 may heat the shaping raw material 100 to such a degree that the shaping raw material 100 may be sufficiently melted. If ABS resin is used as the shaping raw material, the temperature of the heater 33 is set to be 250 degrees C with which the ABS resin is sufficiently melted. The runner 35 is provided for each shaping raw material. The shaping raw material 100, conveyed from the conveying section 10, is inserted into the runner 35.

The twisting section 40 includes a twisting conveyance path 41, to which each shaping raw material, heated and melted by the heater 33, flows and which deforms the shaping raw materials 100 into the shaping material in the process of conveying the shaping raw materials 100 to the shaping section 70 that is located downstream; and the rotary member 45 that is provided within the twisting conveyance path 41 and that rotates about the axis that is parallel to the conveying direction of the twisting conveyance path 41.

The twisting conveyance path 41 has substantially a cylindrical shape with a hollow, and a gate 43 communicating with the runner 35, is formed on the inner surface of twisting conveyance path 41. The melted shaping raw material, which flows within the runner 35, flows into the twisting conveyance path 41 through the gate 43.

The rotary member 45, provided within the twisting conveyance path 41, includes a drive shaft 46 that is rotated and driven by a twisting motor 49; and a twisting projection 47 that is formed such that the twisting projection 47 projects from an end 46a of the drive shaft 46 downstream in the twisting conveyance path 41 and that is eccentrically positioned with respect to the rotation center of the drive shaft 46. The drive shaft 46 is rotated and driven at the speed that corresponds to the revolving speed $f_x$ of the shaping material (the twisting speed of the shaping raw material). The twisting motor 49 is driven and controlled by the control unit 200.

The head section 60, which has the discharge opening 61 to discharge the shaping material 101, is provided on the most downstream of the twisting conveyance path 41. The discharge opening 61 is formed on a head surface 63 that is opposed to the shaping stage 71.

The end 46a of the drive shaft 46 is located upstream of the gate 43 in the twisting conveyance path 41.

Furthermore, in the illustrated example, the twisting projection 47 is provided such that an end 47a is on the same position as the head surface 63. However, the end 47a of the twisting projection 47 may be provided within the twisting conveyance path 41, or may projects toward the shaping stage 71 from the discharge opening 61. In the case of the former, the twisting projection 47 is provided such that at least the end 47a is located at the same position as the downstream end of the gate 43 in the twisting conveyance path 41 or is located further downstream. In the case of the latter, the amount of projection of the twisting projection 47 is set such that it is not in contact with the shaping stage 71 or the uppermost part of a shaped object 102 that is shaped on the shaping stage 71.

The end 46a of the drive shaft 46 is located upstream of the gate 43 in the twisting conveyance path 41, and the end 47a of the twisting projection 47 is located between the position that is the same as the downstream end of the gate 43 and the position such that the end 47a is not in contact with the shaping stage 71 or the uppermost part of the shaped object 102 that is shaped on the shaping stage 71, whereby flowability (flow distribution) of the shaping material 101, discharged through the discharge opening 61, may be uniform. Thus, high-contrast three-dimensional shaped objects may be obtained.

<Shaping section>

The shaping section 70 includes the shaping stage 71 that is provided such that the shaping stage 71 is opposed to the discharge opening 61; and a stage drive motor 73 that moves the shaping stage 71 forward and backward relative to the discharge opening 61 in the directions of the X axis, the Y axis, and the Z axis.
The shaping stage 71 is like a flat plate that extends along the XY plane, and the shaping material 101, discharged through the discharge opening 61, is sequentially deposited on the shaping stage 71 so that a three-dimensional shaped object is formed.
The stage drive motor 73 includes an X-direction motor that moves the shaping stage 71 forward and backward in the X-axis direction; a Y-direction motor that moves the shaping stage 71 forward and backward in the Y-axis direction; and a Z-direction motor that moves the shaping stage 71 forward and backward in the Z-axis direction. These motors may be configured using, for example, linear motors. The stage drive motor 73 is driven and controlled by the control unit 200. According to the present embodiment, the shaping velocity is adjusted in accordance with the moving speed of the shaping stage 71.

<Control unit>

The three-dimensional shaping device 1 includes the control unit 200 that controls an operation of each unit in the conveying section 10, the shaping-material forming section 30, and the shaping section 70.
The control unit 200 drives and controls the conveyance motor 17 of the conveying section 10, the twisting motor 49 of the shaping-material forming section 30, and the stage drive motor 73 of the shaping stage 71. These motors are appropriately driven and controlled by the control unit 200 in accordance with the width of the shaping material, the pitch, the coloration ratio of the shaping raw material (or the color of the shaping material to be formed), the necessary distance between the shaping stage or the uppermost part of the shaped object and the discharge opening, the discharge position of the shaping material above the shaping stage or the shaped object, or the like.
The control unit 200 is a known computer device, and includes a CPU, a memory (ROM, RAM), or the like. The CPU reads a control program stored in the ROM, loads the control program into the RAM, and executes the control program, thereby controlling an operation of each unit of the image forming apparatus.

<Examples of dimensions>

For example, the dimensions of the shaping raw material and the dimensions of each unit included in the three-dimensional shaping device 1 may be set as described below.
Outer diameter of the shaping raw material 100: φ 3 mm
Inner diameter of the raw-material conveyance path 13: φ 3 mm
Inner diameter of the gate 43: φ 0.2 mm
Inner diameters of the twisting conveyance path 41 and the discharge opening 61: φ 0.5 mm
Outer diameter of the drive shaft 46: φ 0.5 mm
Distance between the center of the gate 43 and the end 46a of the drive shaft 46: 0.2 mm
Distance between the center of the gate 43 and the head surface 63: 0.3 mm
Distance between the head surface 63 and the shaping stage 71 or the uppermost part of the shaped object: 0.25 mm
Length of the twisting projection 47: 0.3 mm to 0.7 mm (0.5 mm in FIG. 8)
Revolving speed of the drive shaft 46 (the twisting projection 47): 10 to 200 rps (the speed is increased or decreased with 60 rps as a reference)
Here, the above-described numerical values are only examples.

<Operation of the three-dimensional shaping device>

An operation of the three-dimensional shaping device is explained.

[Conveying process]

During the conveying process, the shaping raw material 100 is conveyed from the conveying section 10 to the shaping-material forming section 30. Each of the shaping raw materials 100 is conveyed in the raw-material conveyance path 13 such that the sum of the conveying velocities of the shaping raw materials 100 in the raw-material conveyance paths 13 is about 0.28 mm/sec in a case where the inner diameter of the twisting conveyance path 41, which is located downstream of the conveying section 10, and the discharge opening 61 is $\phi$ 0.5 mm and the conveying velocity (shaping velocity) of the shaping material in the twisting conveyance path 41 is 10 mm/sec. Here, each of the shaping raw materials 100 is conveyed at the conveying velocity that corresponds to the coloration ratio of each of the shaping raw materials 100 in the shaping material 101. Here, during the conveying process, the shaping raw material 100 is in a solid state.

[Shaping-material forming process]

At the shaping-material forming section 30, each of the shaping raw materials 100 is conveyed in a melted state. Specifically, each of the shaping raw materials 100 is heated and melted at the heat melting section 31, and each shaping raw material in a melted state flows through the runner 35 and flows into the twisting conveyance path 41 through the gate 43.

As the twisting projection 47 rotates within the twisting conveyance path 41, the shaping raw material 100 in each color is twisted in a circumferential direction due to fluid resistance caused by the rotation of the twisting projection 47, and the shaping material with each color arranged in a helical fashion is formed.

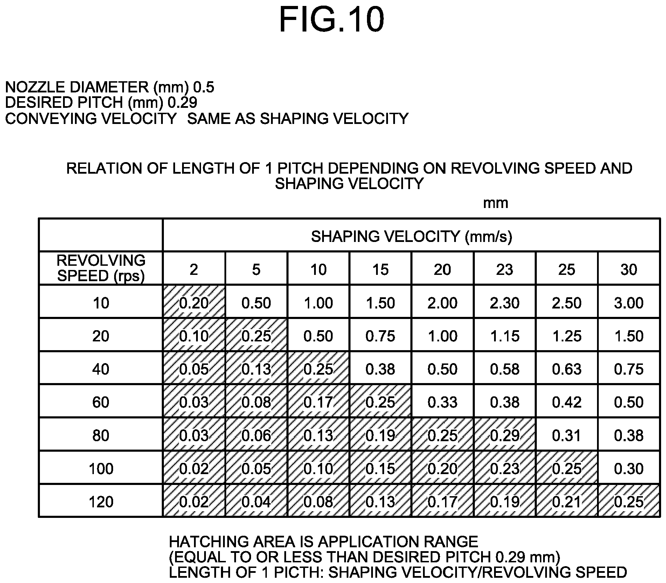

Here, FIG. 10 is a table that illustrates the relation among the revolving speed, the shaping velocity, and 1 pitch of the shaping material. Here, the conditions with regard to shaping are illustrated in the above examples of the dimensions. If the twisting projection 47 is rotated at the revolving speed of 60 rps under the above-described conditions, the pitch $P_x$ of the shaping material 101 is 0.17 mm. As the pitch $P_x$ of the shaping material 101 can be reduced by increasing the revolving speed of the twisting projection 47, a shaping material with higher resolution can be obtained.

The shaping material 101, which is formed in the desired multicolor, is discharged from the discharge opening 61 toward the shaping stage 71.

[Shaping process]

During the shaping process, the stage drive motor 73 is driven and controlled by the control unit 200 on the basis of the three-dimensional drawing data on a shaped object. The shaping stage 71 is moved forward and backward relative to the discharge opening 61 in the directions of the X axis, the Y axis, and the Z axis due to the driving of the stage drive motor 73. The shaping material 101 is deposited on the shaping stage 71 or the uppermost part of the shaped object so that the shaped object is formed.

As described above, with the three-dimensional shaping device according to the present embodiment, shaping may be conducted while changing at least one of the conveying velocity of the shaping raw material, the twisting speed (the revolving speed) of the shaping raw material, and the shaping velocity of the shaping material, or changing in combination, and it is thereby possible to obtain shaped objects that use shaping materials with various pitches or shaping widths.

[Third embodiment: three-dimensional shaping device]

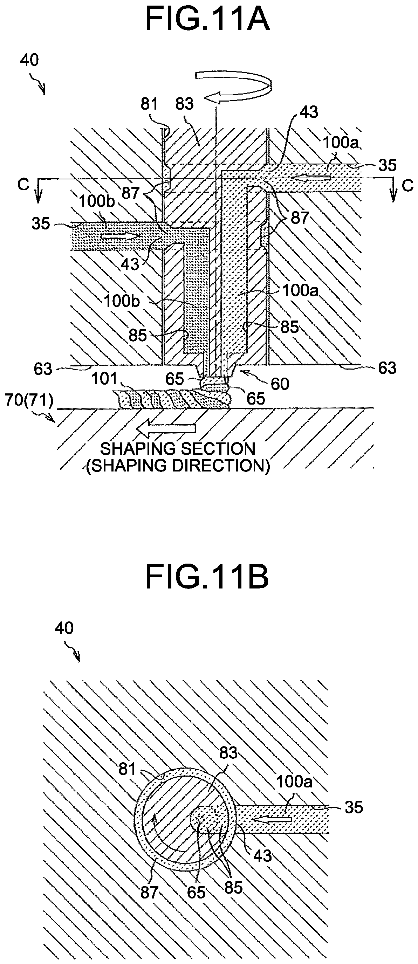

An explanation is given of a three-dimensional shaping device according to a third embodiment of the present invention. FIGS. 11A to 11B are views that schematically illustrate the relevant part of the shaping-material forming section of the three-dimensional shaping device according to the third embodiment of the present invention, FIG. 11A is a longitudinal sectional view, and FIG. 11B is a C-C cross-sectional view of FIG. 11A. Hereafter, the same reference numerals are applied to the same members as in the first embodiment, and the explanations of the same members are omitted.

In the three-dimensional shaping device according to the present embodiment, the twisting section 40 includes a cylindrical rotary member 83 that includes multiple flow paths (conveyance paths) 85 that each convey the deformed shaping raw material 100 in each color; and multiple discharge openings 65 that are provided at one end (the lower end in the drawing) in the axial direction of the rotary member 83 and that discharge the shaping raw material 100 in each color, conveyed through the flow path 85, toward the shaping section 70. The twisting section 40 discharges the shaping raw material through the rotating discharge opening 65 while twisting the shaping raw material, thereby forming the shaping material 101 on the shaping stage 71.

<Twisting section>

The twisting section 40 includes a cylindrical hollow section 81 that has the gate 43 formed on the inner surface of the cylindrical hollow section 81, through which the shaping raw material 100 in each color flows; and the rotary member 83 that is provided within the hollow section 81 and that has substantially a cylindrical shape.

The gate 43 is provided for each shaping raw material, and the gates 43 are arranged such that the axial-direction positions (the vertical-direction positions in the drawing) of the hollow section 81 are different from each other.

The rotary member 83 is provided within the hollow section 81 such that the rotary member 83 rotates about the axis parallel to the axis of the hollow section 81. Furthermore, the inner diameter of the hollow section 81 is set to be substantially the same as the outer diameter of the rotary member 83. Circular recessed sections 87, which continue in a circumferential direction, are formed on the side surface of the rotary member 83 that is opposed to the gates 43. The number of the formed circular recessed sections 87 is the same as the number of the gates 43, and the formed circular recessed sections 87 correspond to the shaping raw materials 100 in colors on a one-to-one basis.

Within the rotary member 83, the separate flow paths 85 are formed, whose one end is opened at an appropriate position of the circular recessed section 87 and which convey the melted shaping raw material 100. The other end of the flow path communicates with the discharge opening 65 that is provided on an end of the rotary member 83.

As illustrated in FIG. 11A, the discharge opening 65 may protrude toward the shaping stage 71 from the head surface 63, or may be provided in substantially the same position as the head surface 63.

<Operation of the three-dimensional shaping device>

An explanation is given of the aspect in which an operation of the three-dimensional shaping device is different from the first embodiment.

[Shaping-material forming process]

The rotary member 83 is rotated and driven at a predetermined speed within the hollow section 81.

Each of the melted shaping raw materials 100, flowing through the runner 35, flows into the circular recessed section 87, which is opposed to the gate 43, through the gate 43. Furthermore, the shaping raw material 100 is injected into the flow path 85 due to the pressure upon flowing from the circular recessed section 87, and the shaping raw material in each color is independently conveyed to the discharge opening 65.

The shaping raw material 100 in each color is discharged toward the shaping stage 71 through the discharge opening 65.

A frictional resistance acts when the shaping raw material 100 is brought into contact with the shaping stage 71 or the uppermost part of the shaped object, and the shaping raw material 100 is twisted and arranged in a helical fashion due to rotation of the rotary member 83 so that the shaping material 101 is obtained.

[Shaping process]

Furthermore, during the shaping process, as is the case with the first embodiment, the shaping stage 71 is moved forward and backward relative to the discharge opening 65 in the directions of the X axis, the Y axis, and the Z axis. The shaping material 101 is sequentially deposited on the shaping stage 71 or the uppermost part of the shaped object so that the shaped object is formed.

<Modified example>

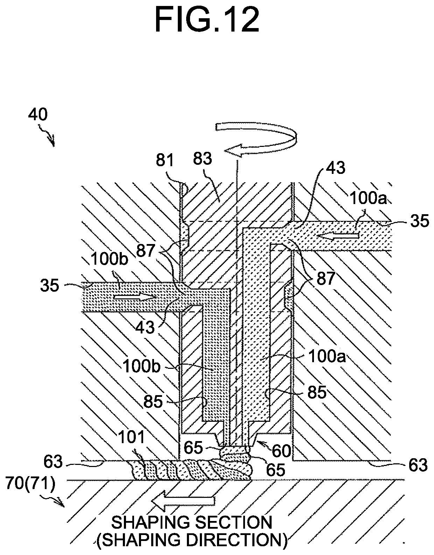

FIG. 12 is a longitudinal sectional view that schematically illustrates the relevant part of the shaping-material forming section, which illustrates a modified example of FIG. 11A. The present example is different from the twisting section 40 of the shaping-material forming section illustrated in FIG. 11A in that the discharge opening 65 is provided within the hollow section 81 and the discharge opening 65 is retracted from the head surface 63. According to the present example, the shaped object is generated while the shaping material 101, which is ejected and formed on the shaping stage 71 or the uppermost part of the shaped object, is pressed by the head surface 63. The width of the shaping material 101 is adjusted by pressing the shaping material 101 with the head surface 63. That is, the width of the shaping material 101 may be adjusted in accordance with the distance between the shaping stage 71 and the head surface 63.

<Advantage>

According to the second embodiment illustrated in FIG. 8, as the shaping material 101 is in contact with the inner wall of the twisting conveyance path 41 in the process of being conveyed through the twisting conveyance path 41, there is a possibility that the color of each of the shaping raw materials 100 is partially mixed. Conversely, according to the present embodiment, as illustrated in FIGS. 11A to 11B and FIG. 12, a configuration is such that each of the shaping raw materials 100 is twisted after being ejected toward the shaping stage 71 through the discharge opening 65; therefore, the shaping raw materials 100 in respective colors are arranged in a helical fashion in a separated state, and the colors are unlikely to be mixed.

[Fourth embodiment]

A fourth embodiment of the present invention is explained. The present embodiment has the feature that the width (layer thickness) of the shaping material to be discharged is increased in accordance with the angle of the slope face of the shaped object.

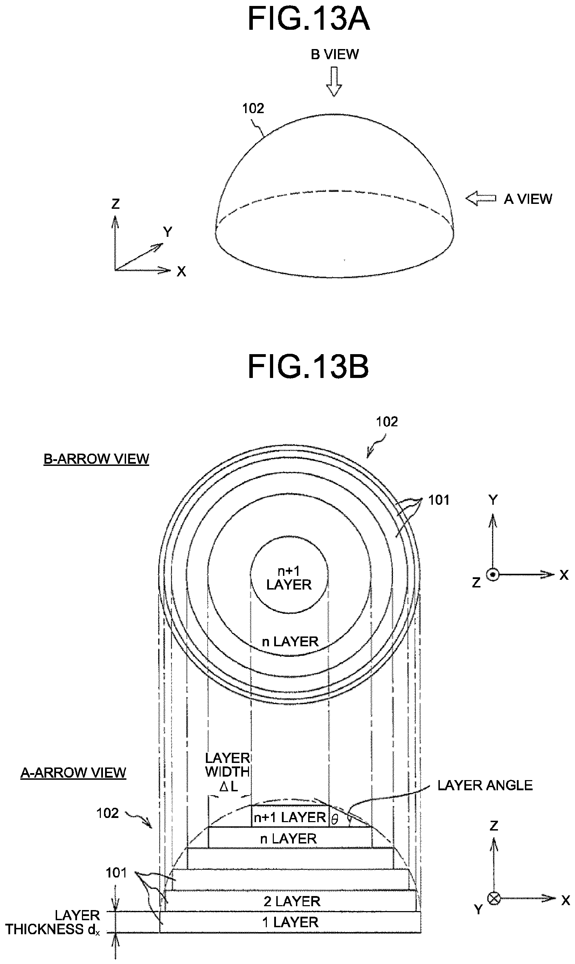

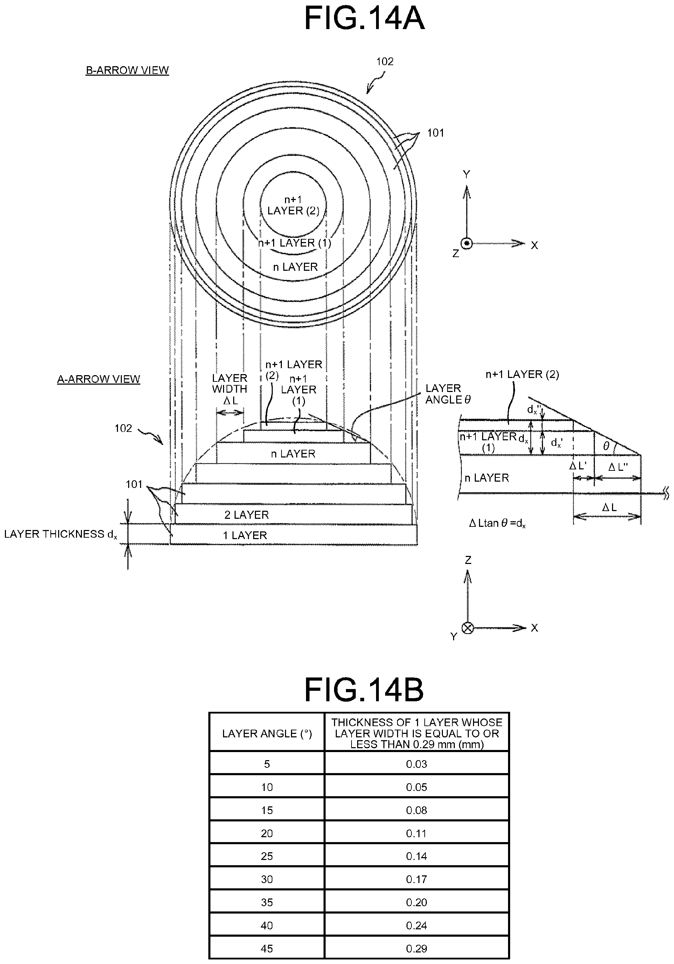

In the following explanation, the "layer thickness" means the thickness of the shaping material that forms each layer (the length in the direction along the direction of the Z axis in FIGS. 13A to 13B and 14A to 14B). Furthermore, the "layer width" means the distance between the edges of the shaping materials that form adjacent layers in the direction along the X-Y plane. Moreover, the "layer angle" means the angle between the edges of the shaping materials that form adjacent layers with respect to the X-Y plane (which corresponds to the elevation angle in the example of FIG. 13A to 13B and 14A to 14B).

<Problem>

FIGS. 13A to 13B are views that illustrate an example of the three-dimensional shaped object that is formed if the thickness of the shaping material, which forms each layer, is the same, FIG. 13A is a perspective view, and FIG. 13B is a view of the arrow A and a view of the arrow B of FIG. 13A.

With the three-dimensional shaping method (the three-dimensional shaping device) according to each embodiment of the present invention, the shaping material is sequentially stacked in the form of laminae so that the shaped object is formed. Therefore, as illustrated in FIG. 13B, the slope face of the shaped object 102 is a false slope that is formed to be stepwise using the shaping materials 101, and is not continuous. In FIGS. 13A to 13B, the semispherical object, protruding upward, is illustrated as an example of the shaped object with the slope face that is formed by stacking the shaping materials in a stepwise manner.

If the shaped object is generated with the same thickness of the shaping materials, as the layer angle is decreased, the layer width is increased. In other words, if the thickness of the shaping material is the same, as the layer angle is decreased, the resolution in the direction along the X-Y plane (the density between the layers in the direction along the X-Y plane) is decreased. If the layer width is small, there is no major problem; however, if the layer width exceeds a predetermined resolution (here, 0.29 mm), there is a possibility that clearness seems to be lost.

Therefore, according to the present embodiment, the thickness of the shaping material which forms each layer, is adjusted to perform control such that the layer width does not exceed a predetermined resolution. Specifically, in accordance with the angle of the slope face that is formed by the first shaping material which forms the first layer (n layer), and the second shaping material which is laminated on the first shaping material to form the second layer (n+1 layer), the thickness of the second shaping material is controlled.

<Means>

FIGS. 14A to 14B are views that illustrate the three-dimensional shaped object that is formed if the thickness of a shaping material, which forms each layer, is changed, FIG. 14A is a view that corresponds to the view of the arrow A and the view of the arrow B in FIG. 13A, and FIG. 14B is a table that illustrates the relation between the layer angle and the thickness of the shaping material.

According to the present embodiment, if the n+1 layer (the second layer) is laminated on the n layer (the first layer) with the reference layer thickness, the n+1 layer part is divided into multiple layers and the shaping material is laminated while the layer angle $\theta$ formed by the n layer and the n+1 layer is retained. Thus, the layer width may be prevented from exceeding a predetermined resolution.

An explanation is given of the method for calculating the layer thickness, or the like.

First, with regard to the n+1 layer (the second layer) that is laminated immediately above the n layer (the first layer), the layer angle $\theta$ of the shaped object in a case where the shaped object is shaped with the reference layer thickness $d_x$ (here, 0.29 mm) is obtained from the CAD data on the shaped object, or the like.

If the obtained layer angle $\theta$ forms the layer width $\Delta L$ that exceeds a predetermined resolution (0.29 mm) in a case where shaping is conducted with the reference layer thickness, the layer thickness $d_x'$ is determined, which may form the layer width that does not exceed the predetermined resolution, while the layer angle $\theta$ is kept.

Specifically, if "$d_x/\tan\theta$=layer width $\Delta L>0.29$ mm", $d_x'$ is determined such that "layer thickness $d_x'\leq0.29\times\tan\theta$" is satisfied.

Next, the number of divisions of the n+1 layer is determined. Here, the number m of layers generated with the determined layer thickness $d_x'$, the presence or absence of layer generated with a layer thickness different from the layer thickness $d_x'$, and the layer thickness $d_x''$ thereof are obtained using the following Equation (14).

$$d_x \;=\; m \,\cdot\, d_x'+d_x'' \qquad\qquad (14)$$

Here, m is an integer greater than or equal to 1, and $0<d_x''<d_x'$.

Finally, shaping is conducted such that the obtained condition is satisfied. The m layers are shaped with the layer thickness $d_x'$ and, if $d_x''$ is present, 1 layer is further shaped with the layer thickness $d_x''$. That is, if $d_x''$ is not present, the n+1 layer is divided into m layers and shaping is conducted and, if $d_x''$ is present, the n+1 layer is divided into m+1 layers and shaping is conducted.

A specific example is given; if the layer angle $\theta$ is 30 degrees and the reference layer thickness is 0.29 mm, the layer thickness $d_x'$ is set to be equal to or less than 0.17 mm, as illustrated in the table of FIG. 14B. According to Equation (14), as "0.29 mm=$1\times0.17$ mm+0.12 mm", 1 layer with the thickness $d_x'$=0.17 mm may be shaped, and 1 layer with the thickness $d_x''$=0.12 mm may be shaped.

Furthermore, if the layer angle $\theta$ is 20 degrees and the reference layer thickness is 0.29 mm, the layer thickness $d_x'$ is set to be equal to or less than 0.11 mm, as illustrated in the table of FIG. 14B. According to Equation (14), as "0.29 mm=$2\times0.11$ mm+0.05 mm", 2 layers with the thickness $d_x'$=0.11 mm may be shaped, and 1 layer with the thickness $d_x''$=0.12 mm may be shaped.

As described above, the part with the reference layer thickness is divided into multiple layers and the shaping materials are laminated while the layer angle $\theta$ is kept; thus, the layer width may be prevented from exceeding a predetermined resolution.

Here, as it is understood from FIGS. 8, 11A to 11B, and 12, the layer thickness is determined in accordance with any one of the shaping material width of the shaping material discharged through the discharge opening and the distance between the head surface and the shaping stage (or the distance between the head surface and the uppermost part of the shaped object). The control unit controls any one of them to obtain the desired layer thickness.

Roughly speaking, the methods for reducing the shaping material width include the method of increasing the shaping velocity and the method of decreasing the conveying velocity of a shaping raw material. However, as the pitch in the shaping material becomes larger, the resolution is reduced (the resolving power becomes higher); therefore, there is a need to change the shaping material width without changing the pitch. Furthermore, when this control is performed, adjustment needs to be made such that the distance between the discharge opening and the shaping stage becomes shorter in accordance with the shaping material width (layer thickness).

«Control example and configuration of the control unit: 1»

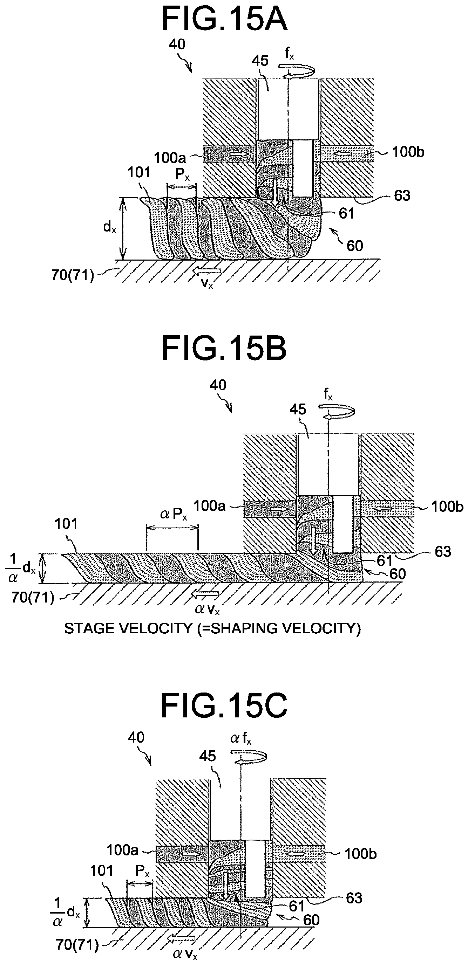

An explanation is given of the process of shaping while increasing the shaping velocity as the method for reducing the shaping material width without changing the pitch. FIGS. 15A to 15C are schematic views that illustrate the shaping process. The state illustrated in FIG. 15A is the reference state.

The shaping flow quantity $Q_x$ is given by "the cross-sectional area of the shaping material$\times$the shaping velocity $v_x$" as represented by Equation (1). In a case where it is considered that the cross-sectional surface of the shaping material is rectangular, if the shaping velocity $v_x$ (the moving speed on the XY plane of the shaping stage) is multiplied by $\alpha$, as illustrated in FIG. 15B, the shaping material width may be $1/\alpha$. However, as the pitch $P_x$ is accordingly multiplied by $\alpha$ according to Equation (2) and the resolution is decreased, the revolving speed $f_x$ (the revolving speed of the rotary member) needs to be set to be $\alpha$-fold, as illustrated in FIG. 15C, so that shaping is conducted while the pitch $P_x$ is kept.

An explanation is given using a specific example. Here, in the following explanation, the cross-sectional surface of the shaping material is rectangular. The reference layer thickness of the shaped object is 0.25 mm, and the layer angle $\theta$ is 20 degrees in a case where the n+1 layer is shaped on the n layer with the reference layer thickness. In this case, the layer thickness of the n+1 layer needs to be set to be equal to or less than 0.11 mm.

With regard to the n+1 layer, as the ratio between the reference layer thickness and the adjusted layer thickness is "0.25 mm/0.11 mm=2.3", the shaping velocity also needs to be 2.3-fold. If the reference shaping velocity is 10 mm/sec, the shaping velocity is 23 mm/sec. As illustrated in FIG. 10, the revolving speed, with which the pitch satisfies the resolution (0.29 mm), is equal to or more than the revolving speed of 80 rps.

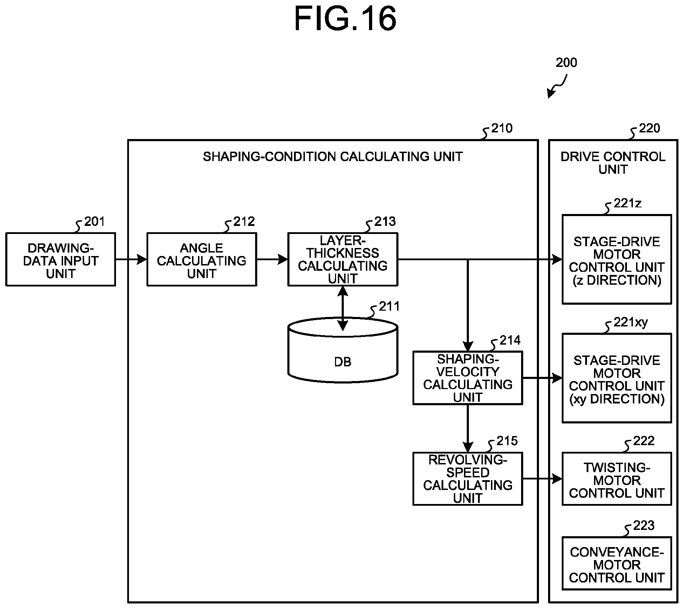

FIG. 16 is a functional block diagram that illustrates a configuration of the control unit that performs the process according to the fourth embodiment. FIG. 16 particularly illustrates the configuration of the control unit that performs the control so as to increase the shaping velocity to reduce the shaping material width without changing the pitch.

Schematically, the control unit 200 includes a drawing-data input unit 201 to which three-dimensional drawing data is input; a shaping-condition calculating unit 210 that calculates a shaping condition on the basis of the drawing data input from the drawing-data input unit 201; and a drive control unit 220 that drives and controls each unit of the three-dimensional shaping device in accordance with the shaping condition calculated by the shaping-condition calculating unit 210.

The shaping-condition calculating unit 210 includes database 211, an angle calculating unit 212, a layer-thickness calculating unit 213, a shaping-velocity calculating unit 214, and a revolving-speed calculating unit 215.

The database 211 stores, as a table, the relation (the data illustrated in FIG. 14B) between the layer angle and the layer thickness, with which the layer width is equal to or less than the predetermined resolution. Furthermore, the database 211 stores, as a table, the relation (the data illustrated in FIG. 10) among the revolving speed, the shaping velocity, and 1 pitch of the shaping material.

The angle calculating unit 212 calculates the layer angle $\theta$ in a case where shaping is conducted with the reference layer thickness on the basis of the drawing data input from the drawing-data input unit 201.

The layer-thickness calculating unit 213 reads, from the data stored in the database 211, the layer thickness with which the layer width satisfies the predetermined resolution in a case where shaping is conducted using the layer angle calculated by the angle calculating unit 212.

The shaping-velocity calculating unit 214 calculates the shaping velocity on the basis of the ratio between the reference layer thickness and the adjusted layer thickness.

The revolving-speed calculating unit 215 reads the revolving speed with which 1 pitch satisfies a predetermined resolution from the data stored in the database 211 and the shaping velocity calculated by the shaping-velocity calculating unit 214.

The drive control unit 220 includes a stage-drive motor control unit 221z that drives the Z-direction motor that moves the shaping stage 71 in the direction of the Z axis; a stage-drive motor control unit 221xy that drives the X-direction motor and the Y-direction motor that move the shaping stage 71 in the direction of the X axis and in the direction of the Y axis, respectively; a twisting-motor control unit 222 that drives and controls the twisting motor 49; and a conveyance-motor control unit 223 that drives and controls the conveyance motor 17.

The stage-drive motor control unit 221z drives and controls the Z-direction motor such that the distance between the shaping stage 71 and the discharge opening is the layer thickness calculated by the layer-thickness calculating unit 213. The stage-drive motor control unit 221xy drives and controls the X-direction motor and the Y-direction motor such that the shaping stage 71 moves at the shaping velocity calculated by the shaping-velocity calculating unit 214. The twisting-motor control unit 222 drives and controls the twisting motor 49 such that the rotary member rotates at the revolving speed calculated by the revolving-speed calculating unit 215. The conveyance-motor control unit 223 drives and controls the conveyance motor 17 such that the shaping raw material is conveyed at the conveying velocity calculated by a conveying-velocity calculating unit 216.

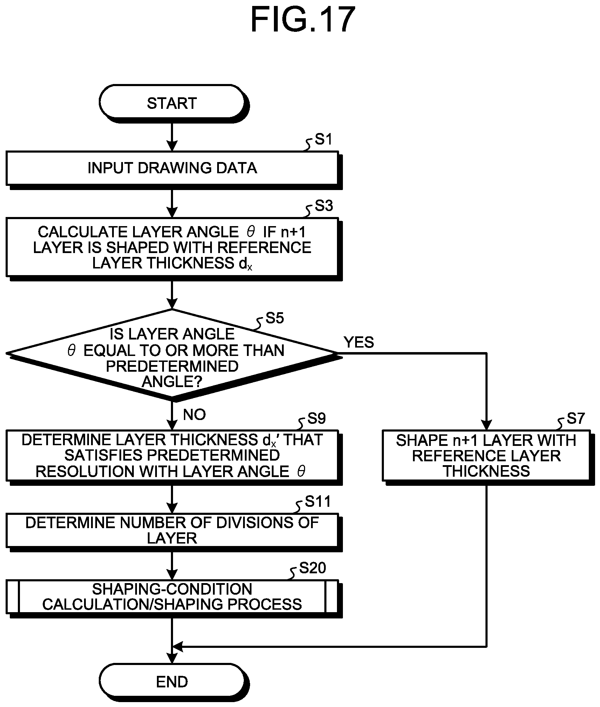

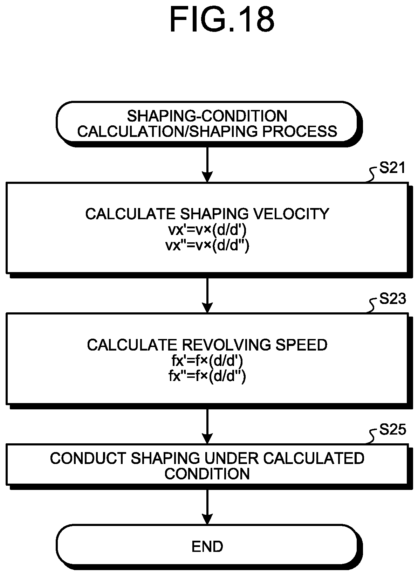

FIG. 17 is the main flowchart of this control. FIG. 18 is a flowchart of the subroutine related to this control.

At Step S1, the drawing-data input unit 201 inputs the drawing data to the angle calculating unit 212 in the shaping-condition calculating unit 210.

At Step S3, on the basis of the input drawing data, the angle calculating unit 212 calculates the layer angle $\theta$ that is formed between the n+1 layer and the n layer if the n+1 layer is shaped with the reference layer thickness $d_x$.

At Step S5, the layer-thickness calculating unit 213 determines whether the calculated layer angle $\theta$ is equal to or more than a predetermined angle. That is, it is determined whether the calculated layer angle $\theta$ forms the layer width which obtains equal to or less than a predetermined resolution if shaping is conducted using the reference layer thickness. For example, in the table of FIG. 14B, it is determined whether the calculated layer angle $\theta$ is equal to or more than 45 degrees.

If the calculated layer angle $\theta$ is equal to or more than the predetermined angle (Yes at Step S5), the operation at Step S7 is performed.

At Step S7, the drive control unit 220 controls each unit of the three-dimensional shaping device such that the n+1 layer is shaped with the layer thickness $d_x$. That is, the stage-drive motor control unit 221z drives and controls the Z-direction motor, the stage-drive motor control unit 221xy drives and controls the X-direction motor and the Y-direction motor, the twisting-motor control unit 222 drives and controls the twisting motor 49, and the conveyance-motor control unit 223 drives and controls the conveyance motor 17. After the n+1 layer is shaped, the process is terminated.

If the calculated layer angle $\theta$ is less than the predetermined angle (No at Step S5), the operation at Step S9 is performed.

At Step S9, the layer-thickness calculating unit 213 calculates the layer thickness $d_x'$ that may form the layer width that satisfies a predetermined resolution if shaping is conducted with the layer angle $\theta$. For example, if the predetermined resolution is 0.29 mm, $d_x'$ is determined such that "layer thickness $d_x' \leq 0.29 \times \tan\theta$" is satisfied. Here, the database 211 stores, as a table, the relation (the data illustrated in FIG. 14B) between the layer angle and the layer thickness, with which the layer width obtains equal to or less than the predetermined resolution so that the angle calculating unit 212 may refer to the table to determine the layer thickness.

At Step S11, the layer-thickness calculating unit 213 determines the number of divisions of the n+1 layer. Specifically, according to Equation (14), the layer-thickness calculating unit 213 calculates the number m of layers that are shaped with the layer thickness $d_x'$ and the presence or absence of layers that are shaped with the layer thickness $d_x''$ that satisfies "$0<d_x''<d_x'$".

At Step S20, the subroutine "shaping-condition calculation/shaping process" is performed.

With reference to FIG. 18, "shaping-condition calculation/shaping process" at Step S20 is explained.

At Step S21, the shaping-velocity calculating unit 214 determines the shaping velocities $v_x'$, $v_x''$ with which shaping may be conducted with the layer thicknesses $d_x'$, $d_x''$. Specifically, in the case of the reference layer thickness $d_x$ and the shaping velocity $v_x$, the shaping velocity is determined by "$v_x'=v_x \cdot (d_x/d_x')$". Furthermore, the same holds for $v_x''$.

At Step S23, the revolving-speed calculating unit 215 determines the revolving speeds $f_x'$, $f_x''$ that may keep the pitch $P_x$ if shaping is conducted at the shaping velocities $v_x'$, $v_x''$. The revolving speed is determined by "$f_x'=f_x \cdot (d_x/d_x')$". Furthermore, the same holds for $f_x''$.

At Step S25, the drive control unit 220 controls each unit of the three-dimensional shaping device such that the n+1 layer is divided into multiple layers and shaping is conducted in accordance with the determined shaping condition. That is, the stage-drive motor control unit 221z drives and controls the Z-direction motor, the stage-drive motor control unit 221xy drives and controls the X-direction motor and the Y-direction motor, the twisting-motor control unit 222 drives and controls the twisting motor 49, and the conveyance-motor control unit 223 drives and controls the conveyance motor 17. After the thickness corresponding to the n+1 layer is shaped, the process is terminated.

«Control example and configuration of the control unit: 2»

An explanation is given of a method for reducing the conveying velocity of the shaping raw material as the method for reducing the shaping material width without changing the pitch. The shaping flow quantity $Q_x$ is the sum of the conveying flow quantities $Q_a$, $Q_b$, ..., of the shaping raw materials, and each conveying flow quantity is given by "the cross-sectional area of the shaping raw material $\times$ the conveying velocity v" as represented by Equation (1) (here, the description of the subscript index, indicating the parameter related to the shaping raw material, is omitted). If the conveying velocities of all the shaping raw materials are $1/\alpha$, the total conveying flow quantity is $1/\alpha$; therefore, the shaping flow quantity $Q_x$ is also $1/\alpha$. In a case where the shaping velocity $v_x$ is kept, if the cross-sectional surface of the shaping material is rectangular, the shaping material width is $1/\alpha$. Furthermore, in this control example, as neither the shaping velocity $v_x$ nor the revolving speed $f_x$ is changed, the pitch $P_x$ is not changed.

An explanation is given using a specific example. Here, in the following explanation, the cross-sectional surface of the shaping material is rectangular. The reference layer thickness of the shaped object is 0.25 mm, and the layer angle θ is 20 degrees if the n+1 layer is shaped on the n layer with the reference layer thickness. In this case, the layer thickness of the n+1 layer needs to be set to be equal or less than 0.11 mm.

With regard to the n+1 layer, the ratio between the reference layer thickness and the adjusted layer thickness is "0.25 mm/0.11 mm=2.3"; therefore, in this control example, the conveying velocities of all the shaping raw materials may be "1/2.3"-fold.

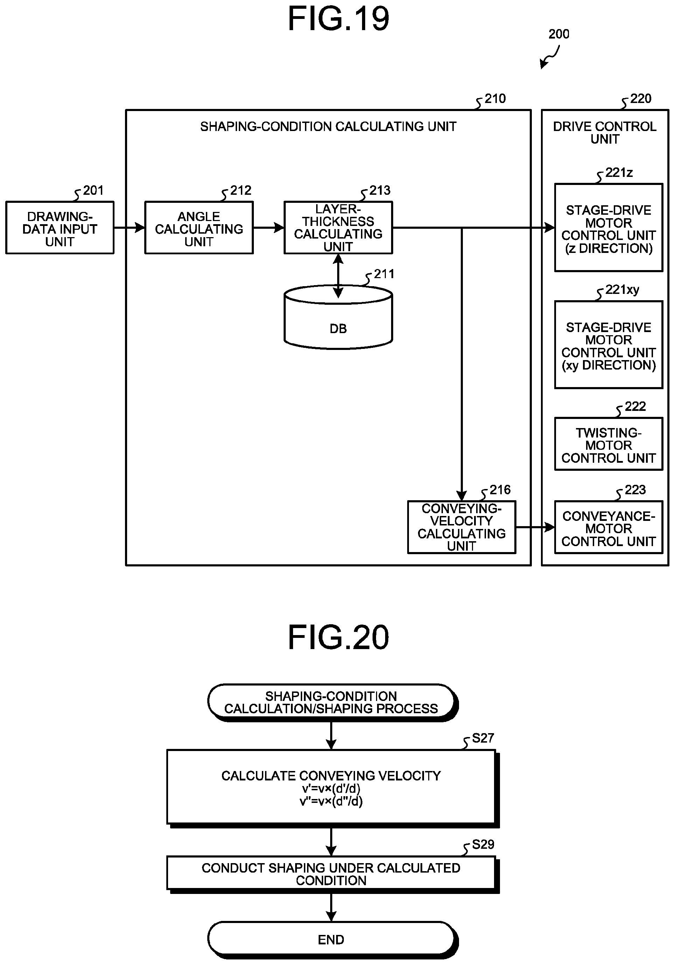

FIG. 19 is a functional block diagram that illustrates a modified configuration of the control unit that performs the process according to the fourth embodiment. FIG. 19 illustrates particularly the configuration of the control unit that performs a control so as to increase the conveying velocity to reduce the shaping material width without changing the pitch. Here, the same reference numerals are applied to the same components as in FIG. 16, and the explanations of the same components are omitted.

The shaping-condition calculating unit 210 includes the conveying-velocity calculating unit 216 that calculates the conveying velocity of the shaping material in accordance with the ratio between the reference layer thickness and the adjusted layer thickness.

An explanation is given of this control in accordance with the flowcharts of FIGS. 17 and 20. FIG. 20 is a flowchart of the subroutine related to this control. As Steps S1 to S11 illustrated in FIG. 17 are the same as in the case where shaping is conducted while increasing the shaping velocity, the explanations of Steps S1 to S11 are omitted.

The subroutine "shaping-condition calculation/shaping process" at Step S20 is explained with reference to FIG. 20.

At Step S27, the conveying-velocity calculating unit 216 determines the conveying velocities v', v'' of the shaping raw material with which shaping may be conducted with the layer thickness $d_x'$, $d_x''$, respectively (here, the description of the subscript index, indicating the parameter related to the shaping raw material, is omitted). The conveying velocity is determined for each shaping raw material. In the case of the reference layer thickness $d_x$ and the conveying velocity v, the conveying velocity is determined by "$v'=v \cdot (d_x'/d_x)$". Furthermore, the same holds for $v_x''$.

At Step S29, the drive control unit 220 controls each unit of the three-dimensional shaping device such that the n+1 layer is divided into multiple layers and shaping is conducted in accordance with the determined shaping condition. That is, the stage-drive motor control unit 221z drives and controls the Z-direction motor, the stage-drive motor control unit 221xy drives and controls the X-direction motor and the Y-direction motor, the twisting-motor control unit 222 drives and controls the twisting motor 49, and the conveyance-motor control unit 223 drives and controls the conveyance motor 17. After the thickness corresponding to the n+1 layer is shaped, the process is terminated.

<Advantage>

As described above, according to the present embodiment, the width (layer thickness) of the shaping material to be discharged is increased in accordance with the angle of the slope face of the shaped object; thus, the layer width does not exceed a predetermined resolution.

[Fifth embodiment]

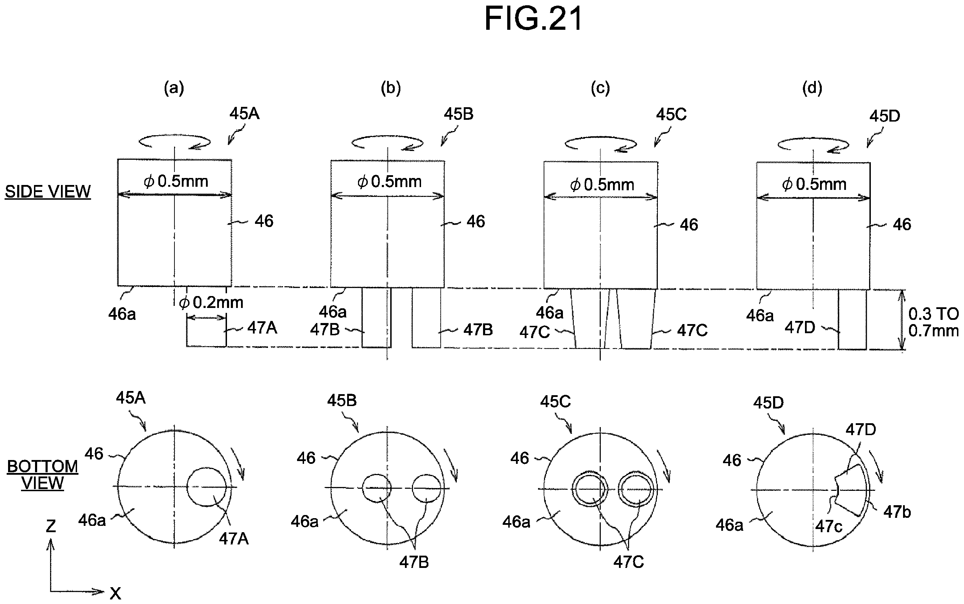

A fifth embodiment of the present invention is explained. The present embodiment is an embodiment according to a modified example of the rotary member that is applied to the three-dimensional shaping device according to the second embodiment illustrated in FIG. 8. FIG. 21 is a side view and a bottom view of the rotary member. Furthermore, the figure illustrates an example of the dimensions of the rotary member.

A rotary member 45A, illustrated in FIG. 21(a), includes a cylindrical twisting projection 47A that projects toward the shaping stage from the end 46a of the cylindrical drive shaft 46. The diameter of the twisting projection 47A is the same in the direction along the rotation center of the drive shaft. Furthermore, the twisting projection 47A is formed at an eccentric position from the rotation center.

A rotary member 45B, illustrated in FIG. 21(b), includes two cylindrical twisting projections 47B that are illustrated in FIG. 21(a). Each of the twisting projections 47B is formed at an eccentric position from the rotation center. With the provision of the twisting projections 47B, the shaping raw material is further mixed.

A rotary member 45C, illustrated in FIG. 21(c), includes two cylindrical twisting projections 47C, 47C that are tapered toward the shaping stage from the end 46a of the cylindrical drive shaft 46. The twisting projection 47C has a taper shape whose diameter is larger at the side of the drive shaft 46 and is smaller at the side of the shaping stage. Each of the twisting projections 47C, 47C is formed at an eccentric position from the rotation center. As the twisting projection 47C has a taper shape, the strength of the twisting projection 47C may be increased, and it is possible to prevent damage due to fluid resistance of the shaping raw material, which is applied during twisting.

A rotary member 45D, illustrated in FIG. 21(d), includes a fan-shaped twisting projection 47D in a cross-sectional shape in the direction perpendicular to the Z axis. The twisting projection 47D includes an outer-circumference side surface 47b and an inner-circumference side surface 47c as two side surfaces that extend along a circumferential direction (rotation direction). As the twisting projection 47D has a predetermined thickness (circumferential-direction length) along the rotation direction of the drive shaft 46, the strength of the twisting projection 47D may be increased, and it is possible to prevent damage due to fluid resistance of the shaping raw material, which is applied during twisting.

The modified examples of the rotary member are explained above and, in order to improve the coloration efficiency of shaping raw materials, it is preferable that the twisting projection is provided on the outer circumference side of the drive shaft. This is because, with regard to the shaped object, the outer side of the shaping material is visually observed, and therefore it is preferable that the coloration efficiency is improved at the outer circumference side rather than the inner side.

[Sixth embodiment]

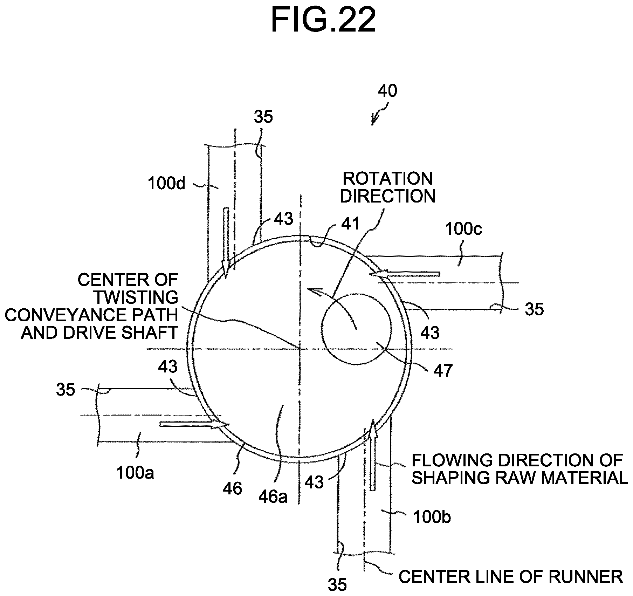

A sixth embodiment of the present invention is explained. The present embodiment is an embodiment according to a modified example of the rotary member that is applied to the three-dimensional shaping device according to the second embodiment illustrated in FIGS. 8 and 9. FIG. 22 is a view that corresponds to the D-D cross-sectional surface of the twisting section illustrated in FIG. 8.

Each of the runners 35 and each of the gates 43 are arranged such that each of the shaping raw materials 100 is caused to flow into the twisting conveyance path 41 in a direction along the twisting direction of the shaping material 101 within the twisting conveyance path 41. As each of the runners 35 conveys the shaping raw material 100 toward the position off the center of the twisting conveyance path 41, the center line of the runner 35 is arranged at the position off the central axis of the twisting conveyance path 41.

In the illustrated example, the shaping raw material 100 files the twisting conveyance path 41 while rotating in a counterclockwise direction due to the inertia force. Therefore, without rotation of the twisting projection 47 of the rotary member 45, the shaping raw material 100 is twisted independently so as to make coloration. According to the present embodiment, as the twisting projection 47 is also rotated in a counterclockwise direction, coloration is further facilitated.

[Aspects and advantages]

Each of the embodiments of the present invention may be implemented in the following aspects.

<First aspect>

The three-dimensional shaping method according to the present aspect is the three-dimensional shaping method for deforming (heating and melting) and depositing the shaping raw material 100 in a predetermined solid shape, and the three-dimensional shaping method has the feature that the three-dimensional shaping method includes a conveying process during which a conveying unit (the conveying section 10) conveys multiple shaping raw materials (the shaping raw materials 100 in different colors) to a deforming unit (the heat melting section 31); a deforming process during which the deforming unit deforms each of the shaping raw materials; a shaping-material forming process during which a shaping-material forming unit (the shaping-material forming section 30) twists and arranges the deformed shaping raw materials in a helical fashion, thereby forming the shaping material 101; and a shaping process during which a shaping unit (the shaping section 70) sequentially deposits the shaping materials to form the three-dimensional shaped object 102.

According to the present aspect, multiple shaping raw materials are twisted and arranged in a helical fashion to form a shaping material, and a shaped object is formed using the shaping materials. If shaping raw materials in different colors are used as the shaping raw materials, a shaped object may be formed by using a shaping material in any color.

<Second aspect>

The three-dimensional shaping method according to the present aspect has the feature that a three-dimensional shaped object is formed while controlling at least one of the conveying velocity of a shaping raw material during the conveying process, the twisting speed of a shaping raw material during the shaping-material forming process, and the shaping velocity during the shaping process.

According to the present aspect, the conveying velocity, the twisting speed, and the shaping velocity are appropriately adjusted so that the deposition interval or the deposition percentage of shaping raw materials included in the shaping material or the thickness of the shaping material is arbitrarily adjusted. As this control is performed, shaping materials with the desired color and resolution may be generated, and therefore it is possible to obtain three-dimensional shaped objects with higher color representation and higher resolution.

<Third aspect>

The three-dimensional shaping method according to the present aspect has the feature that the thickness of the second shaping material is controlled in accordance with the angle of the slope face of the shaping material that is formed by the first shaping material, which forms the first layer, and the second shaping material which is laminated on the first shaping material to form the second layer.

According to the present aspect, the thickness of the second shaping material is controlled in accordance with the angle of the slope face of the formed shaped object so that the shaping width may be adjusted. Here, the shaping width is the gap between the edge of the first shaping material, which forms the first layer, and the edge of the second shaping material, which forms the second layer, in a horizontal direction. If a control is performed such that the shaping width is reduced, the resolution of a three-dimensional shaped object may be improved in a lamination direction of each shaping material.

<Fourth aspect>

The present aspect is related to the three-dimensional shaping device that implements the three-dimensional shaping method according to the first aspect. Specifically, the present aspect is the three-dimensional shaping device 1 that deforms (heats and melts) and deposits the shaping raw material 100 in a predetermined solid shape, thereby forming a three-dimensional shaped object, and has the feature that three-dimensional shaping device includes multiple conveying units (the conveying section 10) that convey multiple shaping raw materials (the shaping raw materials 100 in different colors) to the deforming unit (the heat melting section 31); the deforming unit (the heat melting section 31) that deforms the shaping raw material that is conveyed by each of the conveying units; the shaping-material forming unit (the shaping-material forming section 30) that twists and arranges the deformed shaping raw materials in a helical fashion, thereby forming the shaping material 101; and the shaping unit (the shaping section 70) that sequentially deposits the shaping materials to form the three-dimensional shaped object 102.

According to the present aspect, in the same manner as the first aspect, multiple shaping raw materials are twisted and arranged in a helical fashion to form a shaping material, and a shaped object is formed using the shaping material. If shaping raw materials in different colors are used as the shaping raw materials, a shaped object may be formed using a shaping material in any color.

<Fifth aspect >

In the three-dimensional shaping device according to the present aspect, the shaping-material forming unit (the shaping-material forming section 30) has the feature that the shaping-material forming unit includes the twisting conveyance path 41 that conveys the deformed shaping raw materials 100 while twisting and arranging the shaping raw materials 100 in a helical fashion; and the rotary member 45 that is located upstream in the twisting conveyance path and that is rotated about the axis parallel to the conveying direction of the twisting conveyance path.

Due to the rotation of the rotary member, the three-dimensional shaping device twists and arranges the shaping raw material in a helical fashion. According to the present aspect, shaping raw materials may be twisted with a simple configuration, and colorful three-dimensional shaped objects may be obtained.

<Sixth aspect >

In the three-dimensional shaping device according to the present aspect, the rotary member 45 has the feature that the rotary member 45 includes the drive shaft 46 that is rotated and driven; and the twisting projection 47 that is formed to protrude from the end of the drive shaft downstream in the twisting conveyance path 41 and that is eccentrically positioned with respect to the rotation center of the drive shaft.

As the twisting projection is provided in the rotary member, shaping raw materials may be twisted more efficiently.

<Seventh aspect>

In the three-dimensional shaping device according to the present aspect, the shaping-material forming unit (the shaping-material forming section 30) has the feature that the shaping-material forming unit includes multiple deformed raw-material conveyance paths (the runners 35) that each convey the deformed shaping raw material; and the gates 43 through which each shaping raw material flows into the twisting conveyance path 41 from each of the deformed raw-material conveyance paths, the end 46a of the drive shaft 46 is located upstream of the gates in the twisting conveyance path, and the end 47a of the twisting projection 47 is located between the position that is substantially the same as the downstream end of each of the gates in the twisting conveyance path and the position such that the end 47a is in contact with the shaping unit (the shaping section 70).

The flowability (flow distribution) of the shaping material, discharged into the shaping unit, may be uniform, and high-contrast three-dimensional shaped objects may be obtained.

<Eighth aspect >

In the three-dimensional shaping device according to the present aspect, the gates 43 have the feature that the gates 43 are arranged such that the shaping raw materials 100 are caused to flow into the twisting conveyance path 41 in directions along the twisting direction of the shaping material 101 within the twisting conveyance path 41.

It is possible to obtain a shaping material that is naturally twisted in arrangement due to the inertia force of shaping raw materials.

<Ninth aspect >

In the three-dimensional shaping device according to the present aspect, the shaping-material forming unit (the shaping-material forming section 30) has the feature that the shaping-material forming unit includes the cylindrical rotary member 83 that includes multiple conveyance paths (the flow paths 85) that each convey the deformed shaping raw material 100; and the discharge openings 65 that are provided on one end of the rotary member in an axial direction and that each discharge the shaping raw materials, conveyed through the conveyance paths, toward the shaping unit (the shaping section 70).

According to the present aspect, a configuration is such that each shaping raw material is twisted after being discharged toward the shaping unit through the discharge opening; therefore, each shaping raw material is arranged in a helical fashion in a separated state, and colors are unlikely to be mixed.

<Tenth aspect >

The present aspect produces an advantage in improving the shape accuracy or the dimension accuracy as well as full-color shaping. The present aspect is the method for controlling the orientation direction of resin by control of the rotation direction of a rotary member to promote averaging of the shrinking rate (prevention of anisotropy).

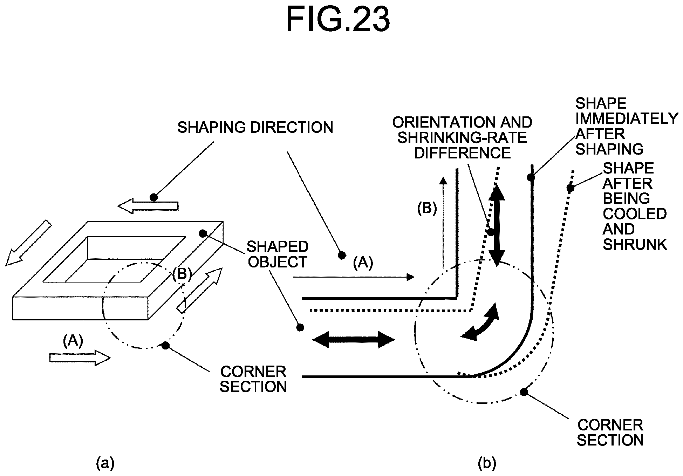

The problem is explained using the example (FIG. 23). FIG. 23(a) is a view of the state where shaping is conducted in the solid line from (A) (shaping from left to right) to (B) (shaping upward at a right angle) using a conventional shaping method without any rotation mechanisms as viewed diagonally, and FIG. 23(b) is a view as viewed from the top. Here, the shaped object is cooled at room temperature, and the shaped object is deformed in the direction of the dotted line; thus, the dimension accuracy is degraded. This is because the shrinking rate is different in the orientation direction (the shrinking rate is large in the orientation parallel direction, and is small in the orthogonal direction). Here, for convenience of explanation, the difference between the shrinking rate in the orientation parallel direction and the shrinking rate in the orthogonal direction is defined as the shrinking-rate difference. In the corner section, the shrinking-rate difference is large at the outer circumference; therefore, the angle at the corner section is an obtuse angle, and the shape accuracy is degraded.

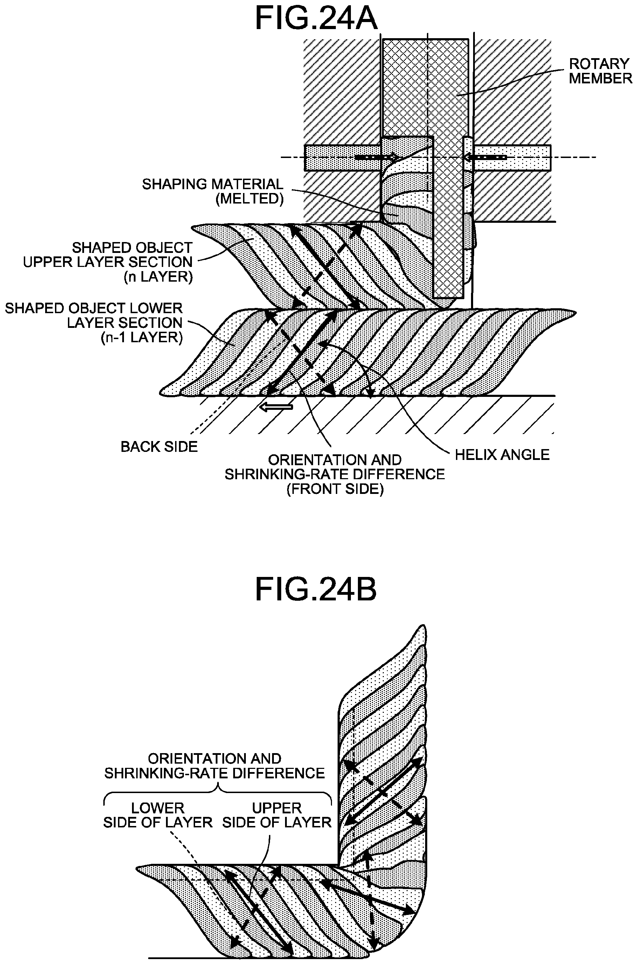

Conversely, FIGS. 24A to 24B illustrate the state of shaping according to the present aspect. FIG. 24A is a view from the side surface, and FIG. 24B is a view from the top. FIG. 24A illustrates the state of shaping where two types of shaping materials are arranged in a helical fashion in order to easily understand the orientation direction. Here, the orientation of the shaping material during shaping is in the same direction as the arrangement direction of the helix. Furthermore, the shrinking-rate difference is also the same as the arrangement direction of the helix. Furthermore, because of the helical structure, the orientations are in the opposite directions at the front side and the rear side as viewed from the side. The orientations of the upper side and the lower side as viewed from the top are also in the opposite directions. The shrinking-rate difference also exhibits the similar tendency. In the case of the helix, as compared to the one that is not helical, due to the rotation by 360 degrees for the shrinking-rate difference as described above, in total, the shrinking-rate difference for one rotation is small. Particularly, if the helix angle is 45 degrees, the shrinking-rate difference for one rotation is smallest. Therefore, shape deformation is also smallest.

Furthermore, the shape of a shaped object tends to change in the direction in which the helix is loosened due to changes with the passage of long time. Therefore, the lower layer section (the n-1 layer) and the upper layer section (the n layer) of the shaped object are in the opposite helical directions (=the twisting directions of the rotary member are opposite) so that an effect is produced such that each other's shape changing directions are eliminated and the shape is stabilized.

Furthermore, this aspect corresponds to the twisting speed according to claim 2 of the present invention. This aspect is an example where the twisting direction is in an opposite direction.

<Eleventh aspect >

In the case of the conventional shaping method without any rotation mechanisms, there is a problem in that, as the shaped object lower layer section (the n-1 layer) has a low temperature that is equal to or less than the melt temperature, when the shaped object upper layer (the n layer) is brought into contact with the shaped object lower layer section (the n-1 layer) during shaping, the temperature of the shaped object upper layer is rapidly decreased and the shaped object upper layer is hard to tightly adhere with the help of fusion. The small adherence force between the layers causes a decrease in the mechanical strength of the shaped object.

According to the present aspect, it is possible to produce an advantage in improving the mechanical strength as well as full-color shaping.

The configuration and the operation are described below.

1) The method and the device arranges the twisting projection of the rotary member in the vicinity of the shaped object lower layer to provide the shearing force to increases the adherence force on the interface due to local temperature increase, pressure generation, and mixing, to improve the mechanical strength.

2) The method and the device brings the twisting projection of the rotary member into contact with the shaped object lower layer to scrape the shaped object lower layer to increase the adherence force on the interface due to the roughness of the front surface, to improve the mechanical strength.

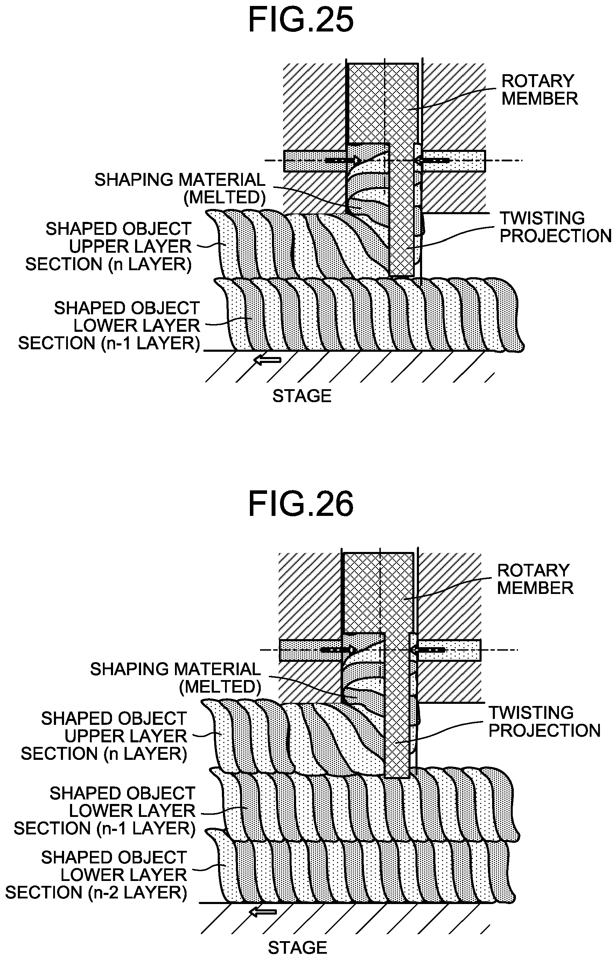

An explanation is given of 1) with reference to FIG. 25.

According to the present aspect, as the rotation mechanism is provided, the shearing heat of the shaping material occurs due to rotation of the rotary member. Therefore, the temperature of the shaping material locally increases, and the adherence force with the shaped object lower layer section increases.

As the twisting projection of the rotary member extends to the shaped object lower layer section (the n-1 layer), the pressure and the shearing force are easily transmitted to the shaped object lower layer section (the n-1 layer); therefore, part of the shaped object lower layer section (the n-1 layer) is melted, and is mixed with the shaped object upper layer section (the n layer), and the adherence force further increases. Thus, the adherence force is increased, and the mechanical strength is improved.

An explanation is given of 2) with reference to FIG. 26.

According to the present aspect, a configuration is such that the twisting projection of the rotary member extends into the shaped object lower layer section (the n-1 layer). Therefore, the heat of the twisting projection is easily and directly transmitted to the shaped object lower layer section, and the shaped object lower layer section is easily melted.

Furthermore, due to rotation of the rotary member, shearing heat occurs in the shaped object lower layer section, which facilitates melting.

As shaping materials are continuously supplied in the above-described melting state, the pressure is easily transmitted, and instant abutment is achieved so that the adherence force is improved. Furthermore, even if there is air on the interface, the air may be dispersed due to the rotation mechanism, and the adherence force may be further improved. Thus, the adherence force is increased, and the mechanical strength is improved.

Reference Signs List

| | |
|---|---|
| 1 | THREE-DIMENSIONAL SHAPING DEVICE |
| 10 | CONVEYING SECTION |
| 11 | CONVEYING MECHANISM |
| 13 | RAW-MATERIAL CONVEYANCE PATH |
| 15 | CONVEYANCE GEAR |
| 17 | CONVEYANCE MOTOR |
| 20 | HEAT INSULATING MEMBER |
| 21 | PATH |
| 30 | SHAPING-MATERIAL FORMING SECTION |
| 31 | HEAT MELTING SECTION |
| 33 | HEATER |
| 35 | RUNNER |
| 40 | TWISTING SECTION |
| 41 | TWISTING CONVEYANCE PATH |
| 43 | GATE |
| 45 | ROTARY MEMBER |
| 46 | DRIVE SHAFT |
| 46a | END |
| 47 | TWISTING PROJECTION |
| 47a | END |
| 49 | TWISTING MOTOR |
| 60 | HEAD SECTION |
| 61 | DISCHARGE OPENING |
| 63 | HEAD SURFACE |
| 65 | DISCHARGE OPENING |
| 70 | SHAPING SECTION |
| 71 | SHAPING STAGE |
| 73 | STAGE DRIVE MOTOR |
| 81 | HOLLOW SECTION |
| 83 | ROTARY MEMBER |
| 85 | FLOW PATH |
| 87 | CIRCULAR RECESSED SECTION |
| 100 | SHAPING RAW MATERIAL |
| 101 | SHAPING MATERIAL |
| 102 | SHAPED OBJECT |
| 200 | CONTROL UNIT |
| 210 | SHAPING-CONDITION CALCULATING UNIT |
| 211 | DATABASE |
| 212 | ANGLE CALCULATING UNIT |

213 LAYER-THICKNESS CALCULATING UNIT
214 SHAPING-VELOCITY CALCULATING UNIT
215 REVOLVING-SPEED CALCULATING UNIT
216 CONVEYING-VELOCITY CALCULATING UNIT
220 DRIVE CONTROL UNIT
221xy STAGE-DRIVE MOTOR CONTROL UNIT
221z STAGE-DRIVE MOTOR CONTROL UNIT
222 TWISTING-MOTOR CONTROL UNIT
223 CONVEYANCE-MOTOR CONTROL UNIT

Prior Art documents

Patent Literatures

Patent Literature 1: Japanese Unexamined Patent Application Publication No. 2013-86289

**Claims**

1. A three-dimensional shaping method for deforming and depositing a plurality of shaping raw materials in a predetermined solid shape, the three-dimensional shaping method comprising:

   a conveying process of conveying the plurality of shaping raw materials to a deforming unit by a conveying unit;
   a deforming process of deforming the shaping raw materials by the deforming unit;
   a shaping-material forming process of twisting and arranging the deformed shaping raw materials in a helical fashion to form a shaping material by a shaping-material forming unit; and
   a shaping process of sequentially depositing the shaping material to form a three-dimensional shaped object by a shaping unit.

2. The three-dimensional shaping method according to claim 1, wherein the three-dimensional shaped object is formed while controlling at least one of a conveying velocity of a shaping raw material at the conveying process, a twisting speed of the shaping raw material at the shaping-material forming process, and a shaping velocity at the shaping process.

3. The three-dimensional shaping method according to claim 1, wherein, in accordance with an angle of a slope face of the shaping material, the slope face being formed by a first shaping material forming a first layer, and a second shaping material laminated on the first shaping material to form a second layer, a thickness of the second shaping material is controlled.

4. A three-dimensional shaping device configured to deform and deposit a plurality of shaping raw materials in a predetermined solid shape to form a three-dimensional shaped object, the three-dimensional shaping device comprising:

   a plurality of conveying units configured to each convey one of the plurality of shaping raw materials to a deforming unit;
   the deforming unit configured to deform the shaping raw materials conveyed by the conveying units;
   a shaping-material forming unit configured to twist and arrange the deformed shaping raw materials in a helical fashion to form a shaping material; and
   a shaping unit configured to sequentially deposit the shaping material to form a three-dimensional shaped object.

5. The three-dimensional shaping device according to claim 4, wherein the shaping-material forming unit includes a twisting conveyance path configured to convey the deformed shaping raw materials while twisting and arranging the deformed shaping raw materials in a helical fashion; and a rotary member located upstream in the twisting conveyance path and configured to be rotated with an axis parallel to a conveying direction of the twisting conveyance path as a rotation axis.

6. The three-dimensional shaping device according to claim 5, wherein the rotary member includes a drive shaft configured to be rotated and driven; and a twisting projection formed to protrude from an end of the drive shaft downstream in the twisting conveyance path, and eccentrically positioned with respect to a rotation center of the drive shaft.

7. The three-dimensional shaping device according to claim 6, wherein the shaping-material forming unit includes a plurality of deformed raw-material conveyance paths configured to each convey one of the deformed shaping raw materials; and a plurality of gates through each of which one of the shaping raw materials flows into the twisting conveyance path from one of the deformed raw-material conveyance paths, the end of the drive shaft is located upstream of the gates in the twisting conveyance path, and an end of the twisting projection is located between a position that is almost the same as downstream ends of the gates in the twisting conveyance path and a position such that the end of the twisting projection is in contact with the shaping unit.

8. The three-dimensional shaping device according to claim 5, wherein each of the gates is arranged such that each of the shaping raw materials is caused to flow into the twisting conveyance path in a direction along a twisting direction of the shaping material in the twisting conveyance path.

9. The three-dimensional shaping device according to claim 4, wherein the shaping-material forming unit includes a cylindrical rotary member including a plurality of conveyance paths configured to each convey one of the deformed shaping raw materials; and a plurality of discharge openings provided on one end of the rotary member in an axial direction and configured to each discharge one of the shaping raw materials conveyed through one of the conveyance paths, toward the shaping unit.

# FIG.1A

# FIG.1B

| DISTANCE m | VISUAL ACUITY | RESOLUTION (mm) |
|---|---|---|
| 0.50 | 1.00 | 0.15 |
| 0.70 | 1.00 | 0.20 |
| 1.00 | 1.00 | 0.29 |
| 1.50 | 1.00 | 0.44 |
| 5.00 | 1.00 | 1.45 |

# FIG.2A

SHAPING DIRECTION
$Q_x, v_x$

TWISTING DIRECTION

REVOLVING SPEED $f_x$

SHAPING DIRECTION

SHAPING MATERIAL WIDTH
$d_x$

SHAPING MATERIAL

PITCH
$P_x$

$P_b$

$P_a$

CONVEYANCE OF SHAPING RAW MATERIAL A
$Q_a, v_a$

CONVEYANCE OF SHAPING RAW MATERIAL B
$Q_b, v_b$

SHAPING RAW MATERIAL WIDTH
$d_a$

$d_b$

# FIG.2B

# FIG.3

EP 3 162 539 A1

FIG.4

$Q_{a2}=Q_{a1}$

SHAPING RAW
MATERIAL A

SHAPING RAW
MATERIAL B

$Q_{b2}=Q_{b1}$

$P_{x2}$

SHAPING
MATERIAL

$f_{x2}=f_{x1}$

$v_{x2}=2v_{x1}$

$d_{x2}$

# FIG.5

$v_{x2}$

$f_{x2}$

$d_{x2}$

SHAPING MATERIAL

$P_{x2}$ $P_{b2}$ $P_{a2}$

CONVEYING VELOCITY A OF SHAPING RAW MATERIAL A $v_{a2}=v_{a1}/2$

SHAPING RAW MATERIAL A

SHAPING RAW MATERIAL B

$v_{b2}=v_{b1}$ CONVEYING VELOCITY B OF SHAPING RAW MATERIAL B

# FIG.6

SHAPING
RAW
MATERIAL A

$Q_a, v_a$

SHAPING
RAW
MATERIAL B

$Q_b, v_b$

SHAPING
MATERIAL

$f_x$

$v_x$

# FIG.7

SHAPING SECTION (SHAPING VELOCITY)

# FIG.8

GATE CENTER TO END OF DRIVE SHAFT

GATE CENTER TO HEAD SURFACE

HEAD SURFACE TO SHAPING STAGE OR UPPERMOST PART OF SHAPED OBJECT

SHAPING STAGE OR UPPERMOST PART OF SHAPED OBJECT

DIAMETER OF TWISTING CONVEYANCE PATH

# FIG.9

# FIG.10

NOZZLE DIAMETER (mm) 0.5
DESIRED PITCH (mm) 0.29
CONVEYING VELOCITY  SAME AS SHAPING VELOCITY

RELATION OF LENGTH OF 1 PITCH DEPENDING ON REVOLVING SPEED AND
SHAPING VELOCITY

mm

| REVOLVING SPEED (rps) | SHAPING VELOCITY (mm/s) | | | | | | | |
|---|---|---|---|---|---|---|---|---|
| | 2 | 5 | 10 | 15 | 20 | 23 | 25 | 30 |
| 10 | 0.20 | 0.50 | 1.00 | 1.50 | 2.00 | 2.30 | 2.50 | 3.00 |
| 20 | 0.10 | 0.25 | 0.50 | 0.75 | 1.00 | 1.15 | 1.25 | 1.50 |
| 40 | 0.05 | 0.13 | 0.25 | 0.38 | 0.50 | 0.58 | 0.63 | 0.75 |
| 60 | 0.03 | 0.08 | 0.17 | 0.25 | 0.33 | 0.38 | 0.42 | 0.50 |
| 80 | 0.03 | 0.06 | 0.13 | 0.19 | 0.25 | 0.29 | 0.31 | 0.38 |
| 100 | 0.02 | 0.05 | 0.10 | 0.15 | 0.20 | 0.23 | 0.25 | 0.30 |
| 120 | 0.02 | 0.04 | 0.08 | 0.13 | 0.17 | 0.19 | 0.21 | 0.25 |

HATCHING AREA IS APPLICATION RANGE
(EQUAL TO OR LESS THAN DESIRED PITCH 0.29 mm)
LENGTH OF 1 PICTH: SHAPING VELOCITY/REVOLVING SPEED

# FIG.11A

40

81  83  43  100a
35
C  87  100b  C
35  87
43  100a
100b  85
85
63  63
101  65  60
70(71)  65
SHAPING SECTION
(SHAPING DIRECTION)

# FIG.11B

40

83
81  100a
35
43
87  65  85

# FIG.12

SHAPING SECTION
(SHAPING DIRECTION)

# FIG.13A

B VIEW

102

Z
Y
X

⇐ A VIEW

# FIG.13B

B-ARROW VIEW

102

101

n+1
LAYER

n LAYER

Y
Z ⊙ X

A-ARROW VIEW

LAYER
WIDTH
ΔL

LAYER ANGLE

102

n+1 LAYER $\theta$

n LAYER

101

2 LAYER

1 LAYER

LAYER
THICKNESS $d_x$

Z
Y ⊗ X

# FIG.14A

B-ARROW VIEW

101

102

n+1
LAYER (2)

n+1 LAYER (1)

n LAYER

Y

Z ⊙ ——→ X

A-ARROW VIEW

102

101

LAYER THICKNESS $d_x$

LAYER
WIDTH
$\Delta L$

n+1 LAYER
(2)  n+1
LAYER
(1)

n LAYER

2 LAYER

1 LAYER

LAYER
ANGLE $\theta$

n+1 LAYER (2)

$d_x''$

n+1 LAYER
(1)  $d_x$  $d_x'$  $\theta$

n LAYER  $\Delta L'$  $\Delta L''$

$\Delta L$

$\Delta L \tan \theta = d_x$

Z

Y ⊗ ——→ X

# FIG.14B

| LAYER ANGLE (°) | THICKNESS OF 1 LAYER WHOSE LAYER WIDTH IS EQUAL TO OR LESS THAN 0.29 mm (mm) |
|---|---|
| 5 | 0.03 |
| 10 | 0.05 |
| 15 | 0.08 |
| 20 | 0.11 |
| 25 | 0.14 |
| 30 | 0.17 |
| 35 | 0.20 |
| 40 | 0.24 |
| 45 | 0.29 |

# FIG.15A

# FIG.15B

STAGE VELOCITY (=SHAPING VELOCITY)

# FIG.15C

# FIG.16

200

**210**

**SHAPING-CONDITION CALCULATING UNIT**

**220**

**DRIVE CONTROL UNIT**

**201**

| DRAWING-DATA INPUT UNIT |

**212**

| ANGLE CALCULATING UNIT |

**213**

| LAYER-THICKNESS CALCULATING UNIT |

**211**

| DB |

**221z**

| STAGE-DRIVE MOTOR CONTROL UNIT (z DIRECTION) |

**214**

| SHAPING-VELOCITY CALCULATING UNIT |

**221xy**

| STAGE-DRIVE MOTOR CONTROL UNIT (xy DIRECTION) |

**215**

| REVOLVING-SPEED CALCULATING UNIT |

**222**

| TWISTING-MOTOR CONTROL UNIT |

**223**

| CONVEYANCE-MOTOR CONTROL UNIT |

# FIG.17

```
            ┌─────────────────┐
            │      START       │
            └────────┬─────────┘
                     │
                     ▼                          ⌐S1
   ┌──────────────────────────────────────┐
   │         INPUT DRAWING DATA            │
   └──────────────────┬───────────────────┘
                      │                         ⌐S3
   ┌──────────────────────────────────────┐
   │  CALCULATE LAYER ANGLE θ IF n+1       │
   │  LAYER IS SHAPED WITH REFERENCE       │
   │  LAYER THICKNESS dx                   │
   └──────────────────┬───────────────────┘
                      │                         ⌐S5
               ◇─────────────────◇
              IS LAYER ANGLE              YES
           θ EQUAL TO OR MORE THAN ───────────────┐
               PREDETERMINED                       │
                  ANGLE?                           │
               ◇────────┬────────◇                 │
                     NO │                          │
                        │          ⌐S9             │         ⌐S7
   ┌──────────────────────────────────────┐   ┌────────────────────────┐
   │ DETERMINE LAYER THICKNESS dx' THAT    │   │  SHAPE n+1 LAYER WITH  │
   │ SATISFIES PREDETERMINED               │   │  REFERENCE LAYER       │
   │ RESOLUTION WITH LAYER ANGLE θ         │   │  THICKNESS             │
   └──────────────────┬───────────────────┘   └───────────┬────────────┘
                      │          ⌐S11                      │
   ┌──────────────────────────────────────┐               │
   │  DETERMINE NUMBER OF DIVISIONS OF     │               │
   │  LAYER                                │               │
   └──────────────────┬───────────────────┘               │
                      │          ⌐S20                      │
   ┌──────────────────────────────────────┐               │
   │  SHAPING-CONDITION                    │               │
   │  CALCULATION/SHAPING PROCESS          │               │
   └──────────────────┬───────────────────┘               │
                      │◄──────────────────────────────────┘
                      ▼
            ┌─────────────────┐
            │       END        │
            └─────────────────┘
```

# FIG.18

```
┌─────────────────────────────────┐
│      SHAPING-CONDITION          │
│  CALCULATION/SHAPING PROCESS    │
└─────────────────────────────────┘
                │
                ▼
                                    ⌇S21
┌─────────────────────────────────────┐
│      CALCULATE SHAPING VELOCITY      │
│            vx'=v×(d/d')              │
│            vx"=v×(d/d")              │
└─────────────────────────────────────┘
                │
                ▼
                                    ⌇S23
┌─────────────────────────────────────┐
│      CALCULATE REVOLVING SPEED       │
│            fx'=f×(d/d')              │
│            fx"=f×(d/d")              │
└─────────────────────────────────────┘
                │
                ▼
                                    ⌇S25
┌─────────────────────────────────────┐
│  CONDUCT SHAPING UNDER CALCULATED    │
│             CONDITION                │
└─────────────────────────────────────┘
                │
                ▼
        ┌───────────────┐
        │      END      │
        └───────────────┘
```

# FIG.19

200

┌─────────────────────────────────────────────────────────────┐  ┌──────────────────────┐
│ ⌐210                                                         │  │ ⌐220                 │
│ SHAPING-CONDITION CALCULATING UNIT                            │  │ DRIVE CONTROL        │
│                                                               │  │ UNIT                 │
│                                                               │  │                      │
│                                                               │  │ ⌐221z                │
│ ⌐201          ⌐212            ⌐213                            │  │ ┌──────────────────┐ │
│ ┌──────────┐  ┌──────────┐  ┌──────────────┐                 │  │ │ STAGE-DRIVE      │ │
│ │ DRAWING- │  │ ANGLE    │  │ LAYER-       │                 │  │ │ MOTOR            │ │
│ │ DATA INPUT│→│CALCULATING│→│ THICKNESS    │─────────────────┼──┼→│ CONTROL UNIT     │ │
│ │ UNIT     │  │ UNIT     │  │ CALCULATING  │                 │  │ │ (z DIRECTION)    │ │
│ └──────────┘  └──────────┘  │ UNIT         │                 │  │ └──────────────────┘ │
│                             └──────────────┘                 │  │                      │
│                                    ↕  ⌐211                    │  │ ⌐221xy               │
│                                  ┌─────┐                      │  │ ┌──────────────────┐ │
│                                  │     │                      │  │ │ STAGE-DRIVE      │ │
│                                  │ DB  │                      │  │ │ MOTOR            │ │
│                                  │     │                      │  │ │ CONTROL UNIT     │ │
│                                  └─────┘                      │  │ │ (xy DIRECTION)   │ │
│                                                               │  │ └──────────────────┘ │
│                                                               │  │                      │
│                                                               │  │ ⌐222                 │
│                                                               │  │ ┌──────────────────┐ │
│                                                               │  │ │ TWISTING-        │ │
│                                                               │  │ │ MOTOR            │ │
│                                      ⌐216                     │  │ │ CONTROL UNIT     │ │
│                             ┌──────────────┐                 │  │ └──────────────────┘ │
│                             │ CONVEYING-   │                 │  │ ⌐223                 │
│                             │ VELOCITY     │─────────────────┼──┼→┌──────────────────┐ │
│                             │ CALCULATING  │                 │  │ │ CONVEYANCE-      │ │
│                             │ UNIT         │                 │  │ │ MOTOR            │ │
│                             └──────────────┘                 │  │ │ CONTROL UNIT     │ │
│                                                               │  │ └──────────────────┘ │
└─────────────────────────────────────────────────────────────┘  └──────────────────────┘

# FIG.20

```
╭──────────────────────────────────╮
│   SHAPING-CONDITION              │
│ CALCULATION/SHAPING PROCESS       │
╰──────────────────────────────────╯
                │
                ▼                    ⌐S27
┌───────────────────────────────────────┐
│   CALCULATE CONVEYING VELOCITY         │
│         v'=v×(d'/d)                     │
│         v"=v×(d"/d)                     │
└───────────────────────────────────────┘
                │
                ▼                    ⌐S29
┌───────────────────────────────────────┐
│ CONDUCT SHAPING UNDER CALCULATED       │
│            CONDITION                    │
└───────────────────────────────────────┘
                │
                ▼
        ╭──────────────╮
        │     END      │
        ╰──────────────╯
```

# FIG.21

SIDE VIEW

(a)      (b)      (c)      (d)

45A    45B    45C    45D

$\phi$ 0.5mm

46   46a   47A   $\phi$ 0.2mm   47B   47C   47D

0.3 TO 0.7mm

BOTTOM VIEW

46   46a   47A   47B   47C   47b   47c

EP 3 162 539 A1

EP 3 162 539 A1

# FIG.22

ROTATION DIRECTION

CENTER OF TWISTING CONVEYANCE PATH AND DRIVE SHAFT

FLOWING DIRECTION OF SHAPING RAW MATERIAL

CENTER LINE OF RUNNER

46

# FIG.23

SHAPING DIRECTION

SHAPED OBJECT

(A)

(B)

(A)

CORNER SECTION

(a)

ORIENTATION AND SHRINKING-RATE DIFFERENCE

SHAPE IMMEDIATELY AFTER SHAPING

SHAPE AFTER BEING COOLED AND SHRUNK

(B)

(A)

CORNER SECTION

(b)

# FIG.24A

ROTARY MEMBER

SHAPING MATERIAL (MELTED)

SHAPED OBJECT UPPER LAYER SECTION (n LAYER)

SHAPED OBJECT LOWER LAYER SECTION (n-1 LAYER)

BACK SIDE

ORIENTATION AND SHRINKING-RATE DIFFERENCE (FRONT SIDE)

HELIX ANGLE

# FIG.24B

ORIENTATION AND SHRINKING-RATE DIFFERENCE

LOWER SIDE OF LAYER

UPPER SIDE OF LAYER

# FIG.25

ROTARY MEMBER

SHAPING MATERIAL (MELTED)

SHAPED OBJECT UPPER LAYER SECTION (n LAYER)

TWISTING PROJECTION

SHAPED OBJECT LOWER LAYER SECTION (n-1 LAYER)

STAGE

# FIG.26

ROTARY MEMBER

SHAPING MATERIAL (MELTED)

SHAPED OBJECT UPPER LAYER SECTION (n LAYER)

TWISTING PROJECTION

SHAPED OBJECT LOWER LAYER SECTION (n-1 LAYER)

SHAPED OBJECT LOWER LAYER SECTION (n-2 LAYER)

STAGE

## INTERNATIONAL SEARCH REPORT

International application No.

PCT/JP2015/062346

### A. CLASSIFICATION OF SUBJECT MATTER
*B29C67/00*(2006.01)i

According to International Patent Classification (IPC) or to both national classification and IPC

### B. FIELDS SEARCHED

Minimum documentation searched (classification system followed by classification symbols)
B29C67/00, B29B7/00

Documentation searched other than minimum documentation to the extent that such documents are included in the fields searched
Jitsuyo Shinan Koho        1922–1996   Jitsuyo Shinan Toroku Koho   1996–2015
Kokai Jitsuyo Shinan Koho   1971–2015   Toroku Jitsuyo Shinan Koho   1994–2015

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | US 2013/0328228 A1 (MarkerBot Industries, LLC),<br>12 December 2013 (12.12.2013),<br>paragraphs [0032] to [0077]; fig. 2 to 6<br>& US 2013/0327917 A1    & US 2013/0329243 A1<br>& US 2013/0329257 A1    & US 2013/0329258 A1 | 1,2,4<br>3,5-9 |
| A | JP 2013-43409 A (Konica Minolta Business<br>Technologies, Inc.),<br>04 March 2013 (04.03.2013),<br>paragraphs [0023] to [0101]; fig. 1 to 21<br>& US 2013/0053995 A1    & CN 102950770 A | 1-9 |

☒ Further documents are listed in the continuation of Box C.          ☐ See patent family annex.

| | |
|---|---|
| * Special categories of cited documents:<br>"A" document defining the general state of the art which is not considered    to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    25 May 2015 (25.05.15) | Date of mailing of the international search report<br>    02 June 2015 (02.06.15) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/062346

C (Continuation).    DOCUMENTS CONSIDERED TO BE RELEVANT

| Category* | Citation of document, with indication, where appropriate, of the relevant passages | Relevant to claim No. |
|---|---|---|
| A | JP 1-232024 A  (Mitsui Engineering & Shipbuilding Co., Ltd.), 18 September 1989 (18.09.1989), page 2, upper right column, line 7 to page 3, lower right column, line 1; fig. 1, 2 (Family: none) | 1-9 |
| A | JP 9-323361 A  (Fuji Sogyo Kabushiki Kaisha), 16 December 1997 (16.12.1997), paragraphs [0017] to [0038]; fig. 1 to 11 (Family: none) | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2013086289 A